# EUROPEAN PATENT SPECIFICATION

(11) **EP 1 936 891 B1**
(45) Date of publication and mention of the grant of the patent: **20.03.2013**
(21) Application number: 06791162.8
(22) Date of filing: 29.09.2006
(51) Int. Cl.: H04L 12/58

(54) **A METHOD FOR SENDING AND RECEIVING THE OFF-LINE MESSAGE, A CLIENT APPARATUS, A SERVER AND A SYSTEM**
VERFAHREN ZUM SENDEN UND EMPFANGEN VON OFFLINE-NACHRICHTEN, CLIENT-VORRICHTUNG, SERVER UND SYSTEM
METHODE D'ENVOI ET DE RECEPTION DE MESSAGE HORS LIGNE, APPAREIL CLIENT, SERVEUR ET SYSTEME

(30) Priority: 11.10.2005 CN 200510112564
(43) Date of publication of application: 25.06.2008
(73) Proprietor: Huawei Technologies Co., Ltd., Longgang District, Shenzhen Guangdong 518129 (CN)
(72) Inventor: MU, Lunjian, 518219 Shenzhen, Guangdong Province (CN)
(74) Representative: Körber, Martin Hans
(86) International application number: PCT/CN2006/002576
(87) International publication number: WO 2007/041937

(56) References cited:
- EP-A1- 1 675 352
- WO-A1-2005/029809
- WO-A2-2007/036777
- CN-A- 1 642 148
- CN-A- 1 859 380
- HOURI IBM A AUDU ALCATEL T HILLER LUCENT T HANSEN AT&T LABORATORIES A: "SIP/SIMPLE Based Presence and IM Architecture; draft-houri-simple-arch-03.txt" IETF STANDARD-WORKING-DRAFT, INTERNET ENGINEERING TASK FORCE, IETF, CH, no. 3, 1 June 2003 (2003-06-01), XP015037981 ISSN: 0000-0004
- CAMPBELL B., MAHY R., JENNINGS C.: 'The Message Session Relay Protocol draft-ietf-simple-message-session-08.txt' SIMPLE WG INTERNET-DRAFT 23 February 2005, XP015027598

## Description

### Cross-reference to related applications

This application claims priority to Chinese Patent Application No. 200510112564.5, field on Oct. 11, 2005, entitled" METHOD, CLIENT DEVICE, SERVER AND SYSTEM FOR SENDING/RECEIVING OFFLINE MESSAGE " , commonly assigned.

### Field of the Invention

The disclosure relates to the communication field, and more particularly to an offline message sending and receiving method, a client device, an offline message processing server, and an offline message processing system in an instant messaging (IM) system based on session initiation protocol (SIP) or SIP for instant messaging and presence leveraging extensions (SIMPLE).

### Background of the Invention

In the prior art, instant messaging (IM) service has already been implemented in the mobile communication network and Internet. The mobile communication network includes the existing 2nd Generation (2G), 2.5G, and the coming 3rd Generation (3G), IP multimedia subsystem (IMS)

The IM service is a mobile data service for Person to Person (P2P) or Person to Group messages based on presence service.

Open Mobile Alliance (OMA) International Standard Organization has constituted standard on the mobile IM, and there are two types of IM systems in the current version of standard specification. One is an IM system based on wireless village (WV) protocol, capable of supporting 2.5G/3G network over HTTP/WAP/SMS protocol; and the other is an IM system based on SIP/SIMPLE, capable of supporting IMS-based IP network over SIP/SIMPLE protocol.

The following scenario exists in the application of the IM system based on SIP/SIMPLE. Assume a SIP/SIMPLE IM subscriber is offline, and it is preset that offline messages can be received and saved. When another subscriber sends the above subscriber an offline message, if it is determined upon conditions (for example, size of the message) that a data channel for sending offline messages needs to be established to store the offline message in the server, the data channel for sending offline messages is established. Likewise, after going online (the status thereof is changed into online), the receiver subscriber intends to obtain the offline message, and if it is determined upon conditions that a data channel needs to be established to obtain the offline message, the data channel for acquiring offline messages is established so as to obtain the offline message stored in the server.

In the IM system based on SIP/SIMPLE IM standard in the related art, no specific method for establishing a data transmission channel between a subscriber client sending offline messages and a subscriber client obtaining offline messages is provided to facilitate sending or receiving offline messages.
"SIP/SIMPLE Based Presence and IM Architecture, draft-houri-simple-arch-03" (XP015037981) provides a method of deferred message delivery to IM application. When the receiver endpoint is not available, the receiver IM Application will archive the message at the message store and arrange for delivery later with the pager mode.

### Summary of the Invention

The disclosure provides an offline message sending and receiving method, a client device, an offline message processing server, and an offline message processing system, so as to improve the processing on offline messages in a SIP/SIMPLE IM system.

In an embodiment of the present invention, a method for sending an offline message is provided as follows.

An offline message sending client sends the offline message to an offline message processing server of an offline message receiver through a message session relay protocol (MSRP) channel, and the offline message processing server stores the received offline message. The MSRP channel is an MSRP channel already established between the offline message sending client and the offline message processing server or a newly-established MSRP channel. If the offline message receiver is a single subscriber, establishing new MSRP channels and sending the offline message comprises: establishing an MSRP channel between the offline message sending client and a sender home IM server; establishing an MSRP channel between the sender home IM server and a receiver home IM server; establishing an MSRP channel between the receiver home IM server and the offline message processing server; and sending, by the offline message sending client, the offline message to the offline message processing server sequentially through the above established MSRP channels.
If the offline message receiver is a group subscriber, establishing new MSRP channels and sending the offline message comprises: establishing an MSRP channel between the offline message sending client and a sender home IM server; establishing an MSRP channel between the sender home IM server and a group home IM server; establishing an MSRP channel between the group home IM server and a receiver home IM server; establishing an MSRP channel between the receiver home IM server and the offline message processing server; and sending, by the offline message sending client, the offline message to the offline message processing server sequentially through the above established MSRP channels.
If the offline message receiver is a group subscriber and new MSRP channels need to be established, sending the offline message comprises: establishing an MSRP channel between the offline message sending client and a group home IM server; establishing an MSRP channel between the group home IM server and the offline message processing server; and sending, by the offline message sending client, the offline message to the offline message processing server sequentially through the above established MSRP channels.

In an embodiment of the present invention, a method for receiving an offline message is provided as follows.

The offline, message stored in an offline message processing server is transmitted through an MSRP channel to an offline message receiving client, wherein the MSRP channel is an MSRP channel already established between the offline message receiving client and the offline message processing server or a newly-established MSRP channel, If new MSRP channels need to be established for receiving the offline message, the method comprises: establishing an MSRP channel between the offline message receiving client and the receiver home IM server; establishing an MSRP channel between the receiver home IM server and the offline message processing server; and transmitting the offline message through the above established MSRP channels.

In an embodiment of the present invention, an offline message processing system including an offline message sending client, an offline message processing server, and an offline message receiving client is provided.

An MSRP channel is established between the offline message sending client and the offline message processing server, the offline message sending client sends an offline message to the offline message processing server through the MSRP channel established there-between, and the offline message processing server stores the received offline message.

An MSRP channel is established between the offline message processing server and the offline message receiving client, and the offline message processing server sends the stored offline message to the offline message receiving client through the established MSRP channel there-between.
The offline message processing system further comprising a sender home instant messaging, IM, server and a receiver home IM server; wherein the MSRP channels established between the offline message sending client and the offline message processing server further comprise: an MSRP channel between the offline message sending client and the sender home IM server; an MSRP channel between the sender home IM server and the receiver home IM server; an MSRP channel between the receiver home IM server and the offline message processing server; and the offline message sending client sends the offline message to the offline message processing server sequentially through the above established MSRP channels.
The offline message processing system further comprising a second group home IM server; wherein the MSRP channels established between the offline message sending client and the offline message processing server comprise: an MSRP channel between the offline message sending client and the second group home IM server; an MSRP channel between the second group home IM server and the offline message processing server; and the offline message sending client sends the offline message to the offline message processing server sequentially through the above established MSRP channels.

The technical scheme of the present invention enables a SIP/SIMPLE IM subscriber to send an offline message to an offline subscriber through established MSRP data channel, and enables an online subscriber to obtain an offline message through an established MSRP data channel. Therefore, it is an important part in the complete solution for offline message in the SIP/SIMPLE IM service system.

### Brief Description of the Drawings

Figure 1 is a signaling flow chart illustrating a client A sending an IM message to a single offline client B through an established MSRP channel according to an embodiment of the present invention;

Figure 2 is another signaling flow chart illustrating a client A sending an IM message to a single offline client B through an established MSRP channel according to an embodiment of the present invention

Figure 3 is a signaling flow chart illustrating a client A sending an IM message to a group with an offline client B through an established MSRP channel;

Figure 4 is another signaling flow chart illustrating a client A sending an IM message to a group with an offline client B through an established MSRP channel;

Figure 5 is a signaling flow chart illustrating a client B acquiring an offline message through an established MSRP channel;

Figure6 is another signaling flow chart illustrating a client B acquiring an offline message through an established MSRP channel;

Figure 7 is still another signaling flow chart illustrating a client B acquiring an offline message through an established MSRP channel;

Figure 8 is a schematic structural view of a client device according to an embodiment of the present invention;

Figure 9 is a schematic structural view of an offline message processing server according to an embodiment of the present invention; and

Figures 10A, 10B, 10C, and 10D are schematic structural views of an offline message processing system according to an embodiment of the present invention.

### Detailed Description of the Embodiments

In a SIP/SIMPLE instant messaging (IM) system, based on the fact whether a receiver subscriber of an offline message is a single or a group subscriber, a client of a subscriber for sending the offline message may establish an message session relay protocol (MSRP) channel between the offline message sending client and an IM server (an offline message processing server) for storing the offline message in two modes whether the IM server of the client participates in the establishment or not, so as to store the offline message through the MSRP channel to the offline message processing server. Four circumstances are respectively described beiow.

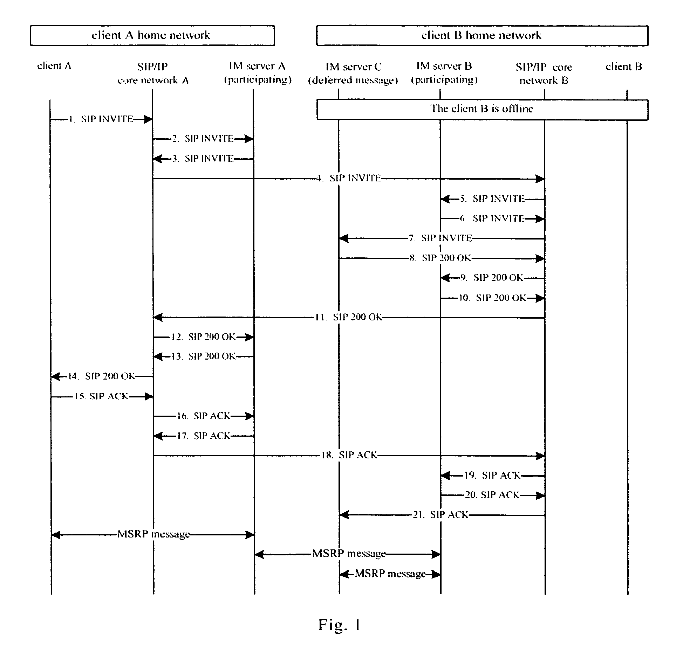

Referring to figure 1, a signaling flow chart illustrating a client A sending an IM message to an offline client B and a home IM server of the client participating in the establishment of an MSRP channel according to an embodiment of the present invention is shown. Definitions of the network entities in the figure are given below.

The clients A and B respectively represent clients of two subscribers in the SIP/SIMPLE IM system.

The SIP/IP core networks A and B are respectively home core networks of the clients A and B, and are the core network of the IMS or IP network defined by 3GPP and 3GPP2.

An IM server A represents a home SIP/SIMPLE IM server of the client A, and plays a participating role.

An IM server B represents a home SIP/SIMPLE IM server of the client B, and plays a participating role.

An IM server C represents a home SIP/SIMPLE IM server of the client B, and plays a offline message processing (deferred message) role.

The detailed signaling process is as follows.

1. When the client A intends to send a message to a subscriber B, and the client B of the subscriber B is offline, the client A decides to send the offline message through a data channel after finding the message information is large in size. Therefore, the client A sends a SIP INVITE message to the SIP/IP core network A in order to establish a data sending channel with the client B. The SIP INVITE message includes the SIP uniform resource identifier (URI) address of the client A and the SIP URI address of the client B. The "Accept-Contact" (receiving contact feature codes) part of the SIP INVITE message includes feature codes of the SIP/SIMPLE IM service (for example, "+g.oma.sip-im"). Meanwhile, the SIP INVITE message carries the transmission capacity and negotiation parameters of the client A in the session description protocol (SDP) parameter, for example, the IP address, port number, and supported transmission media types of the client A.

2. The SIP/IP core network A forwards the SIP INVITE message to the IM server A.

3. The IM server A reads the SIP URI address information of the client B carried in the received SIP INVITE message, and determines the IM server B is a home server of the SIP URI address information(client B). Therefore, the IM server A initiates a new SIP INVITE message to the IM server B first through the SIP/IP core network A. The SIP INVITE message initiated by the IM server A includes the address of the IM server A and the SIP URI address of the client B. The "Accept-Contact" part of the SIP INVITE message initiated by the IM server A includes feature codes of the SIP/SIMPLE IM service (for example, "+g.oma.sip-im"). Meanwhile, the SIP INVITE message initiated by the IM server A carries the transmission capacity and negotiation parameters of the IM server A in the SDP parameter, for example, the IP address, port number, and supported transmission media types of the IM server A.

4. The SIP/IP core network A forwards the SIP INVITE message initiated by the IM server A to the SIP/IP core network B.

5. The SIP/IP core network B forwards the received SIP INVITE message to the home IM server B of the client B.

6. After determining the client B is offline, the IM server B initiates a new SIP INVITE message to the IM server C first through the SIP/IP core network B. The SIP INVITE message initiated by the IM server B includes the address of the IM server B and the SIP URI address of the client B. The "Accept-Contact" part of the SIP INVITE message initiated by the IM server B includes feature codes of the SIP/SIMPLE IM service (for example, "+g.oma.sip-im"). Meanwhile, the SIP INVITE message initiated by the IM server B carries the transmission capacity and negotiation parameters of the IM server B in the SDP parameter, for example, the IP address, port number, and supported transmission media types of the IM server B.

7. The SIP/IP core network B forwards the SIP INVITE message initiated by the IM server B to the IM server C.

8. The IM server C checks the storage capacity for the client B and whether the client B is allowed to store, and agrees to receive the offline message. Therefore, the IM server C feeds back a SIP response (SIP 200 OK) message (response to the SIP INVITE message sent by the IM server B to the IM server C in Steps 6-7) through the SIP/IP core network B to the IM server B. The SDP parameter in the SIP 200 OK message carries the transmission capacity and negotiation parameters of the IM server C applicable to the establishment of an MSRP channel by the IM server B, for example, the IP address, port number, and supported transmission media types of the IM server C.

9. The SIP/IP core network B forwards the SIP 200 OK message to the IM server B.

10. The IM server B determines to send a new SIP 200 OK message (response to the SIP INVITE message sent by the IM server A to the IM server B in Steps 3-5) to the IM server A through the SIP/IP core network B. The SDP parameter in the SIP 200 OK message sent by the IM server B carries the transmission capacity and negotiation parameters of the IM server B applicable to the establishment of an MSRP channel by the IM server A, for example, the IP address, port number, and supported transmission media types of the IM server B.

11. The SIP/IP core network B forwards the SIP 200 OK message sent by the IM server B to the SIP/IP core network A.

12. The SIP/IP core network A forwards the received SIP 200 OK message to the IM server A.

13. The IM server A send a new SIP 200 OK message (response to the SIP INVITE message sent by the client A to the IM server A in Steps 6-7) to the client A first through the SIP/IP core network A. The SDP parameter in the SIP 200 OK message sent by the IM server A carries the transmission capacity and negotiation parameters of the IM server A applicable to the establishment of an MSRP channel by the client A, for example, the IP address, port number, and supported transmission media types of the IM server A.

14. The SIP/IP core network A forwards the SIP 200 OK message sent by the IM server A to the client A.

15. The client A sends a SIP ACK message to the SIP/IP core network A, so as to acknowledge the reception of the SIP 200 OK message sent from the IM server A (referring to Steps 13-14).

16. The SIP/IP core network A forwards the SIP ACK message to the IM server A.

17. The IM server A sends a SIP ACK message to the SIP/IP core network A, so as to acknowledge the reception of the SIP 200 OK message sent from the IM server B (referring to Steps 10-12).

18. The SIP/IP core network A forwards the SIP ACK message sent by the IM sever A to the SIP/IP core network B.

19. The SIP/IP core network B forwards the received SIP ACK message to the IM server B.

20. The IM server B sends a SIP ACK message to the SIP/IP core network B, so as to acknowledge the reception of the SIP 200 OK message sent from the IM server C (referring to Steps 8-9).

21. The SIP/IP core network B forwards the SIP ACK message sent by the IM server B to the IM server C.

In this manner, through Steps 1-21 in the above process, three MSRP channels are respectively established between the client A and the IM server A, the IM server A and the IM server B, and the IM server B and the IM server C, according to the negotiated transmission capacities and parameters, for example, the IP addresses, port numbers, and supported transmission media types.

After that, the client A may start sending a message in the following three steps.

First, the client A uses an MSRP SEND signaling to send the content of the offline message to the IM server A through the MSRP channel between the client A and the IM server A.

Next, the IM server A uses the MSRP SEND signaling to forward the content of the offline message of the client A to the IM server B through the MSRP channel between the IM server A and the IM server B.

Finally, the IM server B uses the MSRP SEND signaling to forward the content of the offline message of the client A to the IM server C through the MSRP channel between the IM server B and the IM server C. Therefore, the IM server C can store the offline message to an offline message storage.

Likewise, responses to the MSRP messages, such as the MSRP 200 OK message and an MSRP delivery report, can be fulfilled between the client A and the IM server C through the above three MSRP channels.

If the above MSRP channels already exist, they can be reused instead of being established once again. The MSRP channels can be disconnected after used.

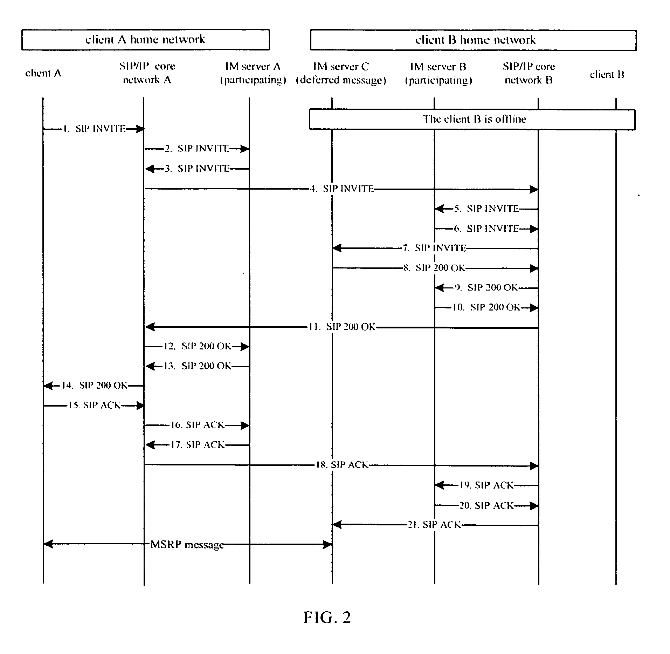

Referring to figure 2, a signaling flow chart illustrating a client A sending an IM message to an offline client B and a home IM server of the client not participating in the establishment of an MSRP channel according to an embodiment of the present invention is shown. Definitions of the network entities in the figure are identical to those in figure 1.

The detailed signaling process is as follows.

1. When the client A intends to send a message to a subscriber B, and the client B of the subscriber B is offline, the client A decides to send the offline message through a data channel after finding the message information is large in size. Therefore, the client A sends a SIP INVITE message to the SIP/IP core network A in order to establish a data sending channel with the client B. The SIP INVITE message includes the SIP URI address of the client A and the SIP URI address of the client B. The "Accept-Contact" (receiving contact feature codes) part of the SIP INVITE message includes feature codes of the SIP/SIMPLE IM service (for example, "+g.oma.sip-im"). Meanwhile, the SIP INVITE message carries the transmission capacity and negotiation parameters of the client A in the SDP parameter, for example, the IP address, port number, and supported transmission media types of the client A.

2. The SIP/IP core network A forwards the SIP INVITE message to the IM server A.

3. The IM server A reads the SIP URI address information of the client B carried in the received SIP INVITE message, and determines the IM server B is a home server of client B. Therefore, the IM server A forward the SIP INVITE message to the IM server B first through the SIP/IP core network A.

4. The SIP/IP core network A forwards the SIP INVITE message to the SIP/IP core network B.

5. The SIP/IP core network B forwards the SIP INVITE message to the home IM server B of the client B.

6. After determining the client B is offline, the IM server B determines forward the SIP INVITE message to the IM server C first through the SIP/IP core network B.

7. The SIP/IP core network B forwards the SIP INVITE message to the IM server C.

8. The IM server C checks the storage capacity for the client B and whether the client B is allowed to store, and agrees to receive the offline message. Therefore, the IM server C feeds back a SIP response (SIP 200 OK) message through the SIP/IP core network B to the IM server B. The SDP parameter in the SIP 200 OK message carries the transmission capacity and negotiation parameters of the IM server C applicable to the establishment of an MSRP channel by the client A, for example, the IP address, port number, and supported transmission media types of the IM server C.

9. The SIP/IP core network B forwards the SIP 200 OK message to the IM server B.

10. The IM server B forwards the SIP 200 OK message to the IM server A first through the SIP/IP core network B.

11. The SIP/IP core network B forwards the SIP 200 OK message to the SIP/IP core network A.

12. The SIP/IP core network A forwards the SIP 200 OK message to the IM server A.

13. The IM server A forwards the SIP 200 OK message to the client A first through the SIP/IP core network A.

14. The SIP/IP core network A forwards the SIP 200 OK message to the client A.

15. The client A sends a SIP ACK message to the SIP/IP core network A, so as to acknowledge the reception of the SIP 200 OK message sent from the IM server C (referring to Steps 8-14).

16. The SIP/IP core network A forwards the SIP ACK message to the IM server A.

17. The IM server A forwards the SIP ACK message to the IM server B first through the SIP/IP core network A.

18. The SIP/IP core network A forwards the SIP ACK message to the SIP/IP core network B.

19. The SIP/IP core network B forwards the SIP ACK message to the IM server B.

20. The IM server B forwards the SIP ACK message to the IM server C first through the SIP/IP core network B.

21. The SIP/IP core network B forwards the SIP ACK message to the IM server C.

In this manner, through Steps 1-21 in the above process, one MSRP channel is established between the client A and the IM server C according to the negotiated transmission capacities and parameters, for example, the IP addresses, port numbers, and supported transmission media types.

Afterward, the client A uses an MSRP SEND signaling to send the content of the offline message to the IM server C through the MSRP channel between the client A and the IM server C. Therefore, the IM server C can store the offline message to an offline message storage.

Likewise, responses to the MSRP messages, such as the MSRP 200 OK message and an MSRP delivery report, can be fulfilled between the client A and the IM server C through the above MSRP channel.

If the above MSRP channel already exists, it can be reused instead of being established once again. The MSRP channel can be disconnected after used.

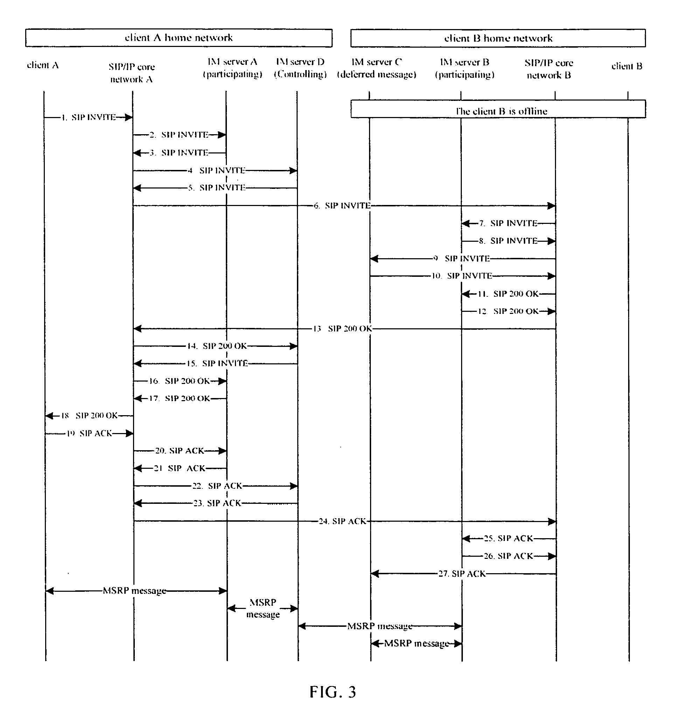

Referring to figure 3, a signaling flow chart illustrating a client A sending an IM message to a group with an offline client B and a home IM server of the client participating in the establishment of an MSRP channel is shown. Definitions of the clients, IM servers, and core networks in the figure are identical to those in FIG. 1. An IM server D represents a home SIP/SIMPLE IM server of the group, and plays a controlling role.

The detailed signaling process is as follows.

1. When the client A intends to send an IM message to a group X, and the client B of a subscriber B in the group is offline, the client A decides to send the offline message through a data channel after finding the message information is large in size. Therefore, the client A sends a SIP INVITE message to the SIP/IP core network A in order to establish a data sending channel with subscribers in the group X. The SIP INVITE message includes the SIP URI address of the client A and the SIP URI address of the group X. The "Accept-Contact" part of the SIP INVITE message includes feature codes of the SIP/SIMPLE IM service (for example, "+g.oma.sip-im"). Meanwhile, the SIP INVITE message carries the transmission capacity and negotiation parameters of the client A in the SDP parameter, for example, the IP address, port number, and supported transmission media types of the client A.

2. The SIP/IP core network A forwards the SIP INVITE message to the IM server A.

3. The IM server A reads the SIP URI address information of the group X carried in the received SIP INVITE message, and determines the IM server D controls the group X. Therefore, the IM server A initiates a new SIP INVITE message to the IM server D first through the SIP/IP core network A. The SIP INVITE message initiated by the IM server A includes the address of the IM server A, the address of the IM server D, and the SIP URI address of the group X. The "Accept-Contact" part of the SIP INVITE message initiated by the IM server A includes feature codes of the SIP/SIMPLE IM service (for example, "+g.oma.sip-im"). Meanwhile, the SIP INVITE message initiated by the IM server A carries the transmission capacity and negotiation parameters of the IM server A in the SDP parameter, for example, the IP address, port number, and supported transmission media types of the IM server A.

4. The SIP/IP core network A forwards the SIP INVITE message initiated by the IM server A to the home IM server D of the group X.

5. After analyzing the subscribers in the group X including the subscriber B, the IM server D initiates a new SIP INVITE message to the IM server B first through the SIP/IP core network A. The SIP INVITE message initiated by the IM server D includes the address of the IM server D and the SIP URI address of the subscriber B. The "Accept-Contact" part of the SIP INVITE message initiated by the IM server D includes feature codes of the SIP/SIMPLE IM service (for example, "+g.oma.sip-im"). Meanwhile, the SIP INVITE message initiated by the IM server D carries the transmission capacity and negotiation parameters of the IM server D in the SDP parameter, for example, the IP address, port number, and supported transmission media types of the IM server D.

In Step 5, the same processing may be performed on other subscribers in the group, and only the processing on the subscriber B is described hereinafter.

6. The SIP/IP core network A forwards the SIP INVITE message initiated by the IM server D to the SIP/IP core network B.

7. The SIP/IP core network B forwards the received SIP INVITE message to the IM server B.

8. After determining the client B is offline, the IM server B initiates a new SIP INVITE message to the IM server C first through the SIP/IP core network B. The SIP INVITE message initiated by the IM server B includes the address of the IM server B and the SIP URI address of the client B. The "Accept-Contact" part of the SIP INVITE message initiated by the IM server B includes feature codes of the SIP/SIMPLE IM service (for example, "+g.oma.sip-im"). Meanwhile, the SIP INVITE message initiated by the IM server B carries the transmission capacity and negotiation parameters of the IM server B in the SDP parameter, for example, the IP address, port number, and supported transmission media types of the IM server B.

9. The SIP/IP core network B forwards the SIP INVITE message initiated by the IM server B to the IM server C.

10. The IM server C checks the storage capacity for the subscriber B and whether the subscriber B is allowed to store, and agrees to receive the offline message. Therefore, the IM server C feeds back a SIP 200 OK message (response to the SIP INVITE message sent by the IM server B to the IM server C in Steps 8-9) through the SIP/IP core network B to the IM server B. The SDP parameter in the SIP 200 OK message carries the transmission capacity and negotiation parameters of the IM server C applicable to the establishment of an MSRP channel by the IM server B, for example, the IP address, port number, and supported transmission media types of the IM server C.

11. The SIP/IP core network B forwards the SIP 200 OK message to the IM server B.

12. The IM server B send a new SIP 200 OK message (response to the SIP INVITE message sent by the IM server D to the IM server B in Steps 5-7) to the IM server D through SIP/IP core networks. The SIP 200 OK message sent by the IM server B is first sent through the SIP/IP core network B. The SDP parameter in the SIP 200 OK message sent by the IM server B carries the transmission capacity and negotiation parameters of the IM server B applicable to the establishment of an MSRP channel by the IM server D, for example, the IP address, port number, and supported transmission media types of the IM server B.

13. The SIP/IP core network B forwards the SIP 200 OK message sent by the IM server B to the SIP/IP core network A.

14. The SIP/IP core network A forwards the received SIP 200 OK message to the IM server D.

15. The IM server D decides to send a new SIP 200 OK message (response to the SIP INVITE message sent by the IM server A to the IM server D in Steps 3-4) to the IM server A first through the SIP/IP core network A. The SDP parameter in the SIP 200 OK message sent by the IM server D carries the transmission capacity and negotiation parameters of the IM server D applicable to the establishment of an MSRP channel by the IM server A, for example, the IP address, port number, and supported transmission media types of the IM server D.

16. The SIP/IP core network A forwards the SIP 200 OK message sent by the IM server D to the IM server A.

17. The IM server A send a new SIP 200 OK message (response to the SIP INVITE message sent by the client A to the IM server A in Steps 1-2) to the client A first through the SIP/IP core network A. The SDP parameter in the SIP 200 OK message sent by the IM server A carries the transmission capacity and negotiation parameters of the IM server A applicable to the establishment of an MSRP channel by the client A, for example, the IP address, port number, and supported transmission media types of the IM server A.

18. The SIP/IP core network A forwards the SIP 200 OK message sent by the IM server A to the client A.

19. The client A sends a SIP ACK message to the SIP/IP core network A, so as to acknowledge the reception of the SIP 200 OK message sent from the IM server A (referring to Steps 17-18).

20. The SIP/IP core network A forwards the SIP ACK message to the IM server A.

21. The IM server A sends a SIP ACK message to the SIP/IP core network A, so as to acknowledge the reception of the SIP 200 OK message sent from the IM server D (referring to Steps 15-16).

22. The SIP/IP core network A forwards the SIP ACK message sent by the IM sever A to the IM server D.

23. The IM server D sends a SIP ACK message to the SIP/IP core network A, so as to acknowledge the reception of the SIP 200 OK message sent from the IM server B (referring to Steps 12-14).

24. The SIP/IP core network A forwards the SIP ACK message sent by the IM sever D to the SIP/IP core network B.

25. The SIP/IP core network B forwards the received SIP ACK message to the IM server B.

26. The IM server B sends a SIP ACK message to the SIP/IP core network B, so as to acknowledge the reception of the SIP 200 OK message sent from the IM server C (referring to Steps 10-11).

27. The SIP/IP core network B forwards the SIP ACK message sent by the IM server B to the IM server C.

In this manner, through Steps 1-27 in the above process, four MSRP channels are respectively established between the client A and the IM server A, the IM server A and the IM server D, the IM server D and the IM server B, and the IM server B and the IM server C according to the negotiated transmission capacities and parameters, for example, the IP addresses, port numbers, and supported transmission media types.

After that, the client A may start sending a message in the following four steps.

First, the client A uses an MSRP SEND signaling to send the content of the offline message to the IM server A through the MSRP channel between the client A and the IM server A.

Next, the IM server A uses the MSRP SEND signaling to forward the content of the offline message of the client A to the IM server D through the MSRP channel between the IM server A and the IM server D.

Then, the IM server D distributes the message to the MSRP channel of each receiver subscriber client in the group, which includes adopting the MSRP SEND signaling to forward the content of the offline message of the client A to the IM server B through the MSRP channel between the IM server D and the IM server B.

Finally, the IM server B uses the MSRP SEND signaling to forward the content of the offline message of the client A to the IM server C through the MSRP channel between the IM server B and the IM server C. Therefore the IM server C can store the offline message to an offline message storage.

Likewise, responses to the MSRP messages, such as the MSRP 200 OK message and an MSRP delivery report, can be fulfilled between the client A and the IM server C through the above four MSRP channels.

If the above MSRP channels already exist, they can be reused instead of being established once again. The MSRP channel can be disconnected after used.

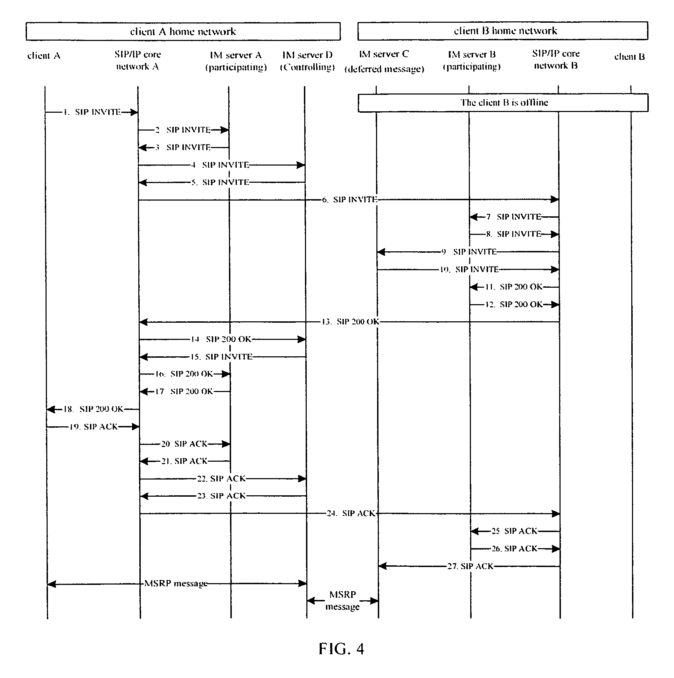

Referring to figure 4, a signaling flow chart illustrating a client A sending an IM message to a group with an offline client B and a home IM server of the client not participating in the establishment of an MSRP channel is shown. Definitions of the network entities in the figure are identical to those in figure 3.

The detailed signaling process is as follows.

1. When the client A intends to send an IM message to a group X, and the client B of a subscriber B in the group is offline, the client A decides to send the offline message through a data channel after finding the message information is large in size. Therefore, the client A sends a SIP INVITE message to the SIP/IP core network A in order to establish a data sending channel with subscribers in the group X. The SIP INVITE message includes the SIP URI address of the client A and the SIP URI address of the group X. The "Accept-Contact" part of the SIP INVITE message includes feature codes of the SIP/SIMPLE IM service (for example, "+g.oma.sip-im"). Meanwhile, the SIP INVITE message carries the transmission capacity and negotiation parameters of the client A in the SDP parameter, for example, the IP address, port number, and supported transmission media types of the client A.

2. The SIP/IP core network A forwards the SIP INVITE message to the IM server A.

3. The IM server A reads the SIP URI address information of the group X carried in the received SIP INVITE message, and determines the IM server D controls the group X. Therefore, the IM server A forwards the SIP INVITE message to the IM server D first through the SIP/IP core network A.

4. The SIP/IP core network A forwards the SIP INVITE message to the home IM server D of the group X.

5. After analyzing the subscribers in the group X including the subscriber B, the IM server D initiates a new SIP INVITE message to the IM server B first through the SIP/IP core network A. The SIP INVITE message initiated by the IM server D includes the SIP URI address of the subscriber A and the SIP URI address of the subscriber B. The "Accept-Contact" part of the SIP INVITE message initiated by the IM server D includes feature codes of the SIP/SIMPLE IM service (for example, "+g.oma.sip-im"). Meanwhile, the SIP INVITE message initiated by the IM server D carries the transmission capacity and negotiation parameters of the IM server D in the SDP parameter, for example, the IP address, port number, and supported transmission media types of the IM server D.

In Step 5, the same processing may be performed on other subscribers in the group, and only the processing on the subscriber B is described hereinafter.

6. The SIP/IP core network A forwards the SIP INVITE message initiated by the IM server D to the SIP/IP core network B.

7. The SIP/IP core network B forwards the received SIP INVITE message to the IM server B.

8. After determining the client B is offline, the IM server B forward the SIP INVITE message initiated by the IM server D to the IM server C first through the SIP/IP core network B.

9. The SIP/IP Core network B forwards the SIP INVITE message initiated by the IM server D to the IM server C.

10. The IM server C checks the storage capacity for the subscriber B and whether the subscriber B is allowed to store, and agrees to receive the offline message. Therefore, the IM server C feeds back a SIP 200 OK message (response to the SIP INVITE message sent by the IM server D to the IM server C in Steps 5-9) to the IM server D first through the SIP/IP core network B. The SDP parameter in the SIP 200 OK message carries the transmission capacity and negotiation parameters of the IM server C applicable to the establishment of an MSRP channel by the IM server D, for example, the IP address, port number, and supported transmission media types of the IM server C.

11. The SIP/IP core network B forwards the SIP 200 OK message to the IM server B.

12. The IM server B forwards the SIP 200 OK message to the IM server D first through the SIP/IP core network B.

13. The SIP/IP core network B forwards the SIP 200 OK message to the SIP/IP core network A.

14. The SIP/IP core network A forwards the SIP 200 OK message to the IM server D.

15. The IM server D sends a new SIP 200 OK message (response to the SIP INVITE message sent by the client A to the IM server D in Steps 1-4) to the client A first through the SIP/IP core network A. The SDP parameter in the SIP 200 OK message sent by the IM server D carries the transmission capacity and negotiation parameters of the IM server D applicable to the establishment of an MSRP channel by the client A, for example, the IP address, port number, and supported transmission media types of the IM server D.

16. The SIP/IP core network A forwards the SIP 200 OK message sent by the IM server D to the IM server A.

17. The IM server A forwards the SIP 200 OK message sent by the IM server D to the SIP/IP core network A.

18. The SIP/IP core network A forwards the SIP 200 OK message sent by the IM server D to the client A.

19. The client A sends a SIP ACK message to the SIP/IP core network A, so as to acknowledge the reception of the SIP 200 OK message sent from the IM server D (referring to Steps 15-18).

20. The SIP/IP core network A forwards the SIP ACK message to the IM server A.

21. The IM server A forwards the SIP ACK message to the SIP/IP core network A.

22. The SIP/IP core network A forwards the SIP ACK message to the IM server D.

23. The IM server D sends a new SIP ACK message to the SIP/IP core network A, so as to acknowledge the reception of the SIP 200 OK message sent from the IM server C (referring to Steps 10-14).

24. The SIP/IP core network A forwards the SIP ACK message sent by the IM server D to the SIP/IP core network B.

25. The SIP/IP core network B forwards the SIP ACK message sent by the IM server D to the IM server B.

26. The IM server B forwards the SIP ACK message sent by the IM server D to the SIP/IP core network B.

27. The SIP/IP core network B forwards the SIP ACK message sent by the IM server D to the IM server C.

In this manner, through Steps 1-27 in the above process, two MSRP channels are established between the client A and the IM server D, and between the IM server D and the IM server C, according to the negotiated transmission capacities and parameters, for example, the IP addresses, port numbers, and supported transmission media types.

After that, the client A may start sending a message in the following two steps.

First, the client A uses an MSRP SEND signaling to send the content of the offline message to the IM server D through the MSRP channel between the client A and the IM server D.

Then, the IM server D distributes the offline message to the MSRP channel of each receiver subscriber client in the group, which includes using the MSRP SEND signaling to forward the content of the offline message of the client A to the IM server C through the MSRP channel between the IM server D and the IM server C. Therefore, the IM server C can store the offline message to an offline message storage.

Likewise, responses to the MSRP messages such as the MSRP 200 OK message and an MSRP delivery report can be fulfilled between the client A and the IM server C through the above two MSRP channels.

If the above MSRP channels already exist, they can be reused instead of being established once again. The MSRP channels can be disconnected after used.

In the SIP/SIMPLE IM system, after the message receiver subscriber is online, the content of an offline message can be acquired from an offline message storage entity in the system through an MSRP channel. The MSRP channel may be established in the following manners so as to acquire the content of the offline message. The details are respectively given below.

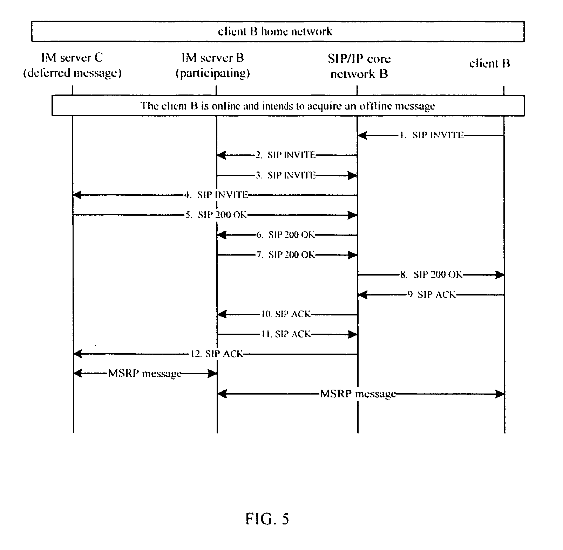

Referring to figure 5, a signaling flow chart illustrating a client acquiring an offline message and a home IM server of the client participating in the establishment of an MSRP channel is shown. In the flow chart, the establishment of the MSRP channel is initiated by the offline message receiving client. Definitions of the client B, SIP/IP core network B, IM server B, and IM server C in the figure are identical to those in figure 1.

The detailed signaling process is as follows.

1. After being online and informed of offline messages, the client B decides obtain the offline message by establishing an MSRP channel, according to factors such as the number of the messages and the size of the message information. Therefore, the client B sends a SIP INVITE message to the SIP/IP core network B in order to establish a data retrieve channel. The SIP INVITE message includes the SIP URI address of the client B and the offline message ID(s) to be obtained. The "Accept-Contact" part of the SIP INVITE message includes feature codes of the SIP/SIMPLE IM service (for example, "+g.oma.sip-im"). Meanwhile, the SIP INVITE message carries the transmission capacity and negotiation parameters of the client B in the SDP parameter, for example, the IP address, port number, and supported transmission media types of the client B.

2. The SIP/IP core network B forwards the SIP INVITE message to the IM server B.

3. The IM server B reads the information carried in the received SIP INVITE message, and determines an MSRP channel is to be established to obtain an offline message. Therefore, the IM server B initiates a new SIP INVITE message to the IM server C first through the SIP/IP core network B. The SIP INVITE message initiated by the IM server B includes the SIP URI address of the client B, the offline message ID(s) to be obtained, and the address of the IM server C. The "Accept-Contact" part of the SIP INVITE message initiated by the IM server B includes feature codes of the SIP/SIMPLE IM service (for example, "+g.oma.sip-im"). Meanwhile, the SIP INVITE message initiated by the IM server B carries the transmission capacity and negotiation parameters of the IM server B in the SDP parameter, for example, the IP address, port number, and supported transmission media types of the IM server B.

4. The SIP/IP core network B forwards the SIP INVITE message initiated by the IM server B to the IM server C.

5. The IM server C agrees the subscriber B to obtain the offline message, and feeds back a SIP 200 OK message (response to the SIP INVITE message sent by the IM server B to the IM server C in Steps 3-4) to the IM server B first through the SIP/IP core network B. The SDP parameter in the SIP 200 OK message carries the transmission capacity and negotiation parameters of the IM server C applicable to the establishment of an MSRP channel by the IM server B, for example, the IP address, port number, and supported transmission media types of the IM server C.

6. The SIP/IP core network B forwards the SIP 200 OK message to the IM server B.

7. The IM server B sends a new SIP 200 OK message through the SIP/IP core network B to the client B. The SDP parameter in the SIP 200 OK message sent by the IM server B carries the transmission capacity and negotiation parameters of the IM server B applicable to the establishment of an MSRP channel by the IM server D, for example, the IP address, port number, and supported transmission media types of the IM server B.

8. The SIP/IP core network B forwards the SIP 200 OK message sent by the IM server B to the client B.

9. The client B sends a SIP ACK message to the SIP/IP core network B, so as to acknowledge the reception of the SIP 200 OK message sent from the IM server B (referring to Steps 7-8).

10. The SIP/IP core network B forwards the SIP ACK message to the IM server B.

11. The IM server B sends a SIP ACK message to the SIP/IP core network B. so as to acknowledge the reception of the SIP 200 OK message sent from the IM server C (referring to Steps 15-16).

12. The SIP/IP core network B forwards the SIP ACK message sent by the IM server B to the IM server C.

In this manner, through Steps 1-12 in the above process, two MSRP channels are established between the client B and the IM server B, and between the IM server B and the IM server C, according to the negotiated transmission capacities and parameters, for example, the IP addresses, port numbers, and supported transmission media types.

After that, the client B may start acquiring an offline message or the IM server C starts sending an offline message to the client B. For example, the IM server C sends an offline message in the following two steps.

First, the IM server C uses an MSRP SEND signaling to send the content and information (such as the saving time and sender) of the offline message to the IM server B through an MSRP channel between the IM server C and the IM server B.

Next, the IM server B uses the MSRP SEND signaling to forward the message content and information of the IM server C to the client B through an MSRP channel between the IM server B and the client B, and then the client B displays the message content and related information to the subscriber B.

Likewise, responses to the MSRP messages, such as the MSRP 200 OK message and an MSRP delivery report, can be fulfilled between the client B and the IM server C through the above two MSRP channels.

If the above MSRP channels already exist, they can be reused instead of being established once again. The MSRP channels can be disconnected after used.

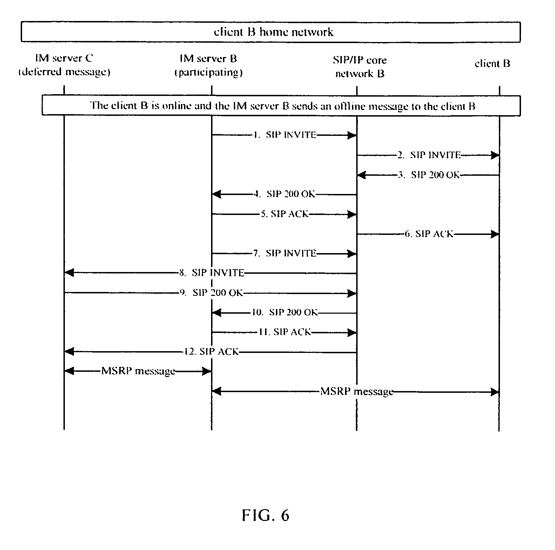

In the above process of figure 5, it is an example that the request of establishing an MSRP channel is initiated by a client. Further, the request of establishing an MSRP channel may also be initiated by the IM server B, and the process of the establishment of an MSRP channel is shown in figure 6. The detailed signaling process is as follows.

1. After the client B is online, the home IM server B detects there are offline messages for the client B, and needs to obtain the offline message by establishing an MSRP message, according to factors such as the number of the messages and the size of the message information. Therefore, the home IM server B sends a SIP INVITE message to the SIP/IP core network B in order to establish a message sending data channel. The SIP INVITE message includes the SIP URI address of the subscriber B. The "Accept-Contact" of the SIP INVITE message includes feature codes of the SIP/SIMPLE IM service (for example, "+g.oma.sip-im"). Meanwhile, the SIP INVITE message carries the transmission capacity and negotiation parameters of the home IM server B in the SDP parameter, for example, the IP address, port number, and supported transmission media types of the home IM server B.

2. The SIP/IP core network B forwards the SIP INVITE message to the client B.

3. The client B reads the information carried in the received SIP INVITE message, and determines an MSRP channel is to be established to send an offline message. Therefore, the client B agrees with the establishment, and feeds back a SIP 200 "OK" message to the home IM server B through the SIP/IP core network B. The SDP parameter in the SIP 200 "OK" message carries the transmission capacity and negotiation parameters of the client B applicable to the establishment of an MSRP channel by the home IM server B, for example, the IP address, port number, and supported transmission media types of the client B.

4. The SIP/IP core network B forwards the SIP 200 "OK" message to the home IM server B.

5. The home IM server B sends a SIP ACK message to the SIP/IP core network B, so as to acknowledge the reception of the SIP 200 "OK" message sent from the client B.

6. The SIP/IP core network B forwards the SIP ACK message to the client B.

Through Steps 1-6, an MSRP channel between the home IM server B and the offline message receiving client B is established.

7. The home IM server B initiates a new SIP INVITE message through the SIP/IP core network B to the IM server C performing a deferred message function. The SIP INVITE message includes the SIP URI address of the home IM server B, the address of the IM server C, and the offline message ID(s) to be obtained. The "Accept-Contact" of the SIP INVITE message includes feature codes of the SIP/SIMPLE IM service (for example, "+g.oma.sip-im"). Meanwhile, the SIP INVITE message carries the transmission capacity and negotiation parameters of the home IM server B in the SDP parameter, for example, the IP address, port number, and supported transmission media types of the home IM server B.

8. The SIP/IP core network B forwards the SIP INVITE message to the IM server C.

9. The IM server C agrees the subscriber B to obtain the offline message, and feeds back a SIP 200 "OK" message to the IM server B through the SIP/IP core network B. The SDP parameter in the SIP 200 "OK" message carries the transmission capacity and negotiation parameters of the IM server C applicable to the establishment of an MSRP channel by the IM server B, for example, the IP address, port number, and supported transmission media types of the IM server C.

10. The SIP/IP core network B forwards the SIP 200 "OK" message to the home IM server B.

11. The home IM server B sends a SIP ACK message to the SIP/IP core network B, so as to acknowledge the reception of the SIP 200 "OK" message sent from the IM server C.

12. The SIP/IP core network B forwards the SIP ACK message to the IM server C.

Through Steps 7-12, an MSRP channel between the home IM server B and the IM server C is established.

In this manner, through Steps 1-12 in the above process, two MSRP channels are established between the offline message receiving client B and the home IM server B, and between the home IM server B and the IM server C performing a deferred message function, according to the negotiated transmission capacities and parameters, for example, the IP addresses, port numbers, and supported transmission media types.

After that, the client B may start acquiring an offline message or the IM server C starts sending an offline message to the client B. For example, the IM server C sends an offline message in the following two steps.

First, the IM server C uses an MSRP SEND signaling to send the content and information (such as the saving time and sender) of the offline message to the home IM server B.

Next, the home IM server B uses the MSRP SEND signaling to forward the message content and information of the IM server C to the client B, and then the client B displays the message content and related information to the subscriber B.

Likewise, responses to the MSRP messages, such as the MSRP 200 OK message and an MSRP delivery report, can be fulfilled between the client B and the IM server C.

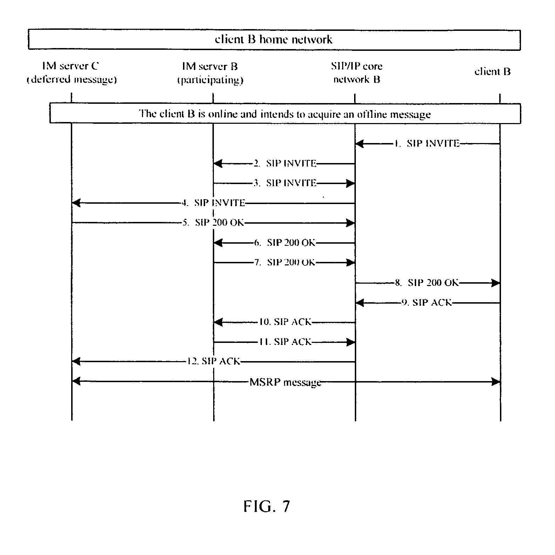

Referring to figure 7, a signaling flow chart illustrating a client B acquiring an offline message and a home IM server of the client not participating in the establishment of an MSRP channel is shown. Definitions of the network entities in the figure are identical to those in figure 5.

The detailed signaling process is as follows.

1. After being online and informed of offline messages, the client B decides to obtain the offline message by establishing an MSRP channel, according to factors such as the number of the messages and the size of the message information. The client B sends a SIP INVITE message to the SIP/IP core network B in order to establish a data retrieve channel. The SIP INVITE message includes the SIP URI address of the client B and the offline message ID(s) to be obtained. The "Accept-Contact" part of the SIP INVITE message includes feature codes of the SIP/SIMPLE IM service (for example, "+g.oma.sip-im"). Meanwhile, the SIP INVITE message carries the transmission capacity and negotiation parameters of the client B in the SDP parameter, for example, the IP address, port number, and supported transmission media types of the client B.

2. The SIP/IP core network B forwards the SIP INVITE message to the IM server B.

3. The IM server B reads the information carried in the received SIP INVITE message, and determines an MSRP channel is to be established to obtain an offline message. Therefore, the IM server B forwards the SIP INVITE message to the IM server C first through the SIP/IP core network B

4. The SIP/IP core network B forwards the SIP INVITE message to the IM server C.

5. The IM server C agrees the subscriber B to obtain the offline message, and feeds back a SIP 200 OK message (response to the SIP INVITE message sent by the client B to the IM server C in Steps 1-4) to the client B first through the SIP/IP core network B. The SDP parameter in the SIP 200 OK message carries the transmission capacity and negotiation parameters of the IM server C applicable to the establishment of an MSRP channel by the client B, for example, the IP address, port number, and supported transmission media types of the IM server C.

6. The SIP/IP core network B forwards the SIP 200 OK message to the IM server B.

7. The IM server B forwards the SIP 200 OK message through the SIP/IP core network B to the client B.

8. The SIP/IP core network B forwards the SIP 200 OK message to the client B.

9. The client B sends a SIP ACK message to the SIP/IP core network B, so as to acknowledge the reception of the SIP 200 OK message sent from the IM server C (referring to Steps 5-8).

10. The SIP/IP core network B forwards the SIP ACK message to the IM server B.

11. The IM server B forwards the SIP ACK message to the SIP/IP core network B.

12. The SIP/IP core network B forwards the SIP ACK message to the IM server C.

In this manner, through Steps 1-21 in the above process, one MSRP channels are established between the client B and the IM server C, according to the negotiated transmission capacities and parameters, for example, the IP addresses, port numbers, and supported transmission media types.

After that, the client B may start acquiring an offline message or the IM server C starts sending an offline message to the client B. For example, the IM server C sends an offline message in the following step.

The IM server C uses an MSRP SEND signaling to send the content and information (such as the saving time and sender) of the offline message to the client B through MSRP channels between the IM server C and the client B, and then the client B displays the message content and related information to the subscriber B.

Likewise, responses to the MSRP messages, such as the MSRP 200 OK message and an MSRP delivery report, can be fulfilled between the client B and the IM server C through the above MSRP channels.

If the above MSRP channels already exist, they can be reused instead of being established once again. After the usage, the MSRP channels can be disconnected.

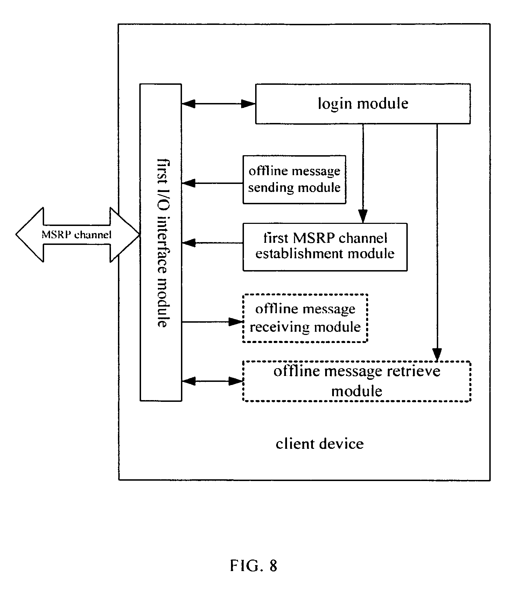

According to the above methods in the embodiments of the present invention, a client device is provided and has a structure shown in figure 8. The client device includes a first input/output (I/O) interface module, a login module, an offline message sending module, and further a first MSRP channel establishment module. After the login module logs onto a SIP/SIMPLE IM system through the first I/O interface module, the first MSRP channel establishment module establishes an MSRP channel between the first I/O interface module and an offline message processing server of an offline message receiver. When the offline message sending module sends an offline message, the first I/O interface module transmits the offline message through the established MSRP channel to the offline message processing server of the offline message receiver.

In an embodiment of the present invention, the client device further includes an offline message receiving module or an offline message retrieve module. The offline message receiving module is configured to store and display the received offline message if the first I/O interface module receives the offline message sent from the offline message processing server through the MSRP channel, after the login module logs onto the SIP/SIMPLE IM system through the first I/O interface module.

The offline message retrieve module is configured to send an offline message retrieve request through the established MSRP channel to the offline message processing server, and receives the offline message fed back from the offline message processing server, and then stores and displays the received offline message after the login module logs onto the SIP/SIMPLEIM system through the first I/O interface module.

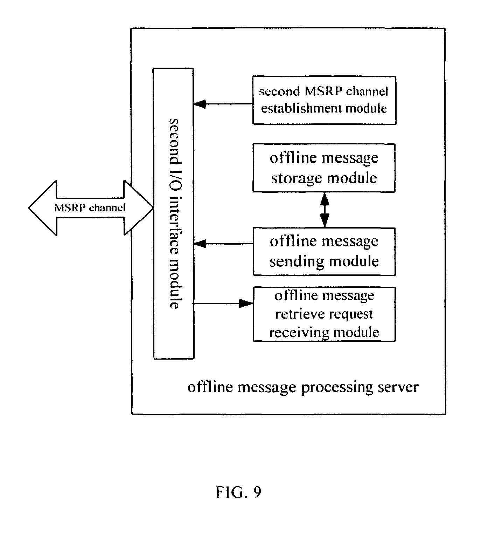

An offline message processing server according to a embodiment of the present invention is provided with a structure shown in FIG. 9. The offline message processing server includes a second I/O interface module, a second MSRP channel establishment module, an offline message storage module, and an offline message sending module.

The second MSRP channel establishment module establishes an MSRP channel to the offline message receiving client through the second I/O interface module.

The offline message sending module obtains a stored offline message from the offline message storage module, and sends the offline message to the offline message receiving client through the established MSRP channel.

The offline message processing server further includes an offline message retrieve request receiving module, configured to receive an offline message retrieve request transmitted from the offline message receiving client through the MSRP channel. In particular, the offline message sending module acquires the stored offline message from the offline message storage module, and feeds back the offline message to the offline message receiving client initiating the retrieve request.

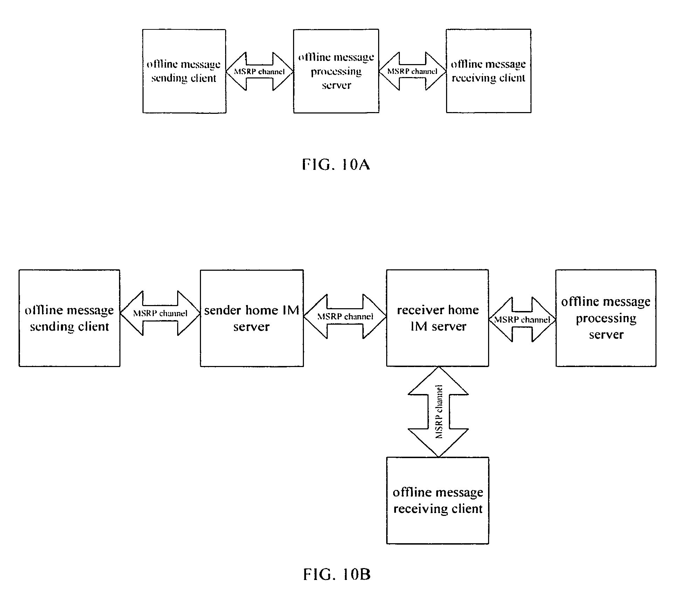

In an embodiment of the present invention, an offline message processing system is provided with a structure shown in figure 10A. The offline message processing system includes an offline message sending client, an offline message processing server, and an offline message receiving client. The detailed structure of the offline message sending/receiving client is shown in figure 8, and the detailed structure of the offline message processing server is shown in figure 9. MSRP channels are established between the offline message sending client and the offline message processing server, the offline message sending client sends an offline message to the offline message processing server through the MSRP channels established there-between, and the offline message processing server stores the received offline message. MSRP channels are established between the offline message processing server and the offline message receiving client, and the offline message processing server sends the stored offline message to the offline message receiving client through the established MSRP channels there-between.

An offline message processing system according to one embodiment of the present invention is provided with a structure shown in figure 10B. The offline message processing system includes an offline message sending client, an offline message processing server, an offline message receiving client, a sender home IM server, and further a receiver home IM server.

In particular, an MSRP channel is established between the offline message sending client and a home IM server thereof.

An MSRP channel is established between the sender home IM server and the receiver home IM server.

An MSRP channel is established between the receiver home IM server and the offline message processing server.

The offline message sending client sends the offline message to the offline message processing server sequentially through the above established MSRP channels.

When the offline message receiving client receives the offline message, an MSRP channel is established between the offline message receiving client and a home IM server thereof, and an MSRP channel is established between the receiver home IM server and the offline message processing server.

The offline message processing server sends the offline message to the offline message receiving client through the above established MSRP channels.

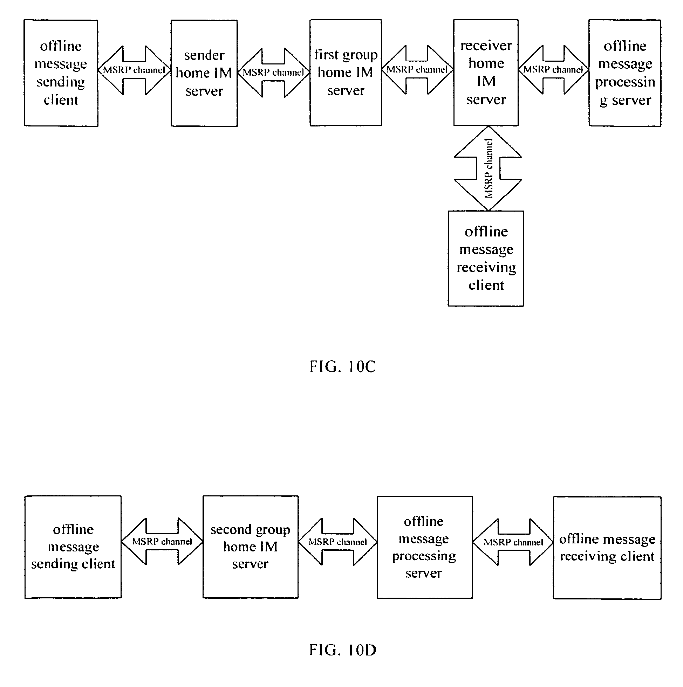

An offline message processing system according to one embodiment of the present invention is provided with a structure shown in figure 10C. Compared with figure 10B, the offline message processing system of this embodiment further has a first group home IM server.

In particular, an MSRP channel is established between the offline message sending client and the sender home IM server.

An MSRP channel is established between the sender home IM server and the first group home IM server.

An MSRP channel is established between the first group home IM server and the receiver home IM server.

An MSRP channel is established between the receiver home IM server and the offline message processing server.

The offline message sending client sends the offline message to the offline message processing server sequentially through the above established MSRP channels.

An offline message processing system according to one embodiment of the present invention is provided with a structure shown in figure 10D. Compared with figure 10A, the offline message processing system of this embodiment further has a second group home IM server.

In particular, an MSRP channel is established between the offline message sending client and the second group home IM server.

An MSRP channel is established between the second group home IM server and the offline message processing server.

The offline message sending client sends the offline message to the offline message processing server sequentially through the above established MSRP channels.

Though illustration and description of the present disclosure have been given with reference to exemplary embodiments thereof, it should be appreciated by persons of ordinary skill in the art various modifications and variations in form and detail can be made without deviation from the scope of this disclosure, which are defined by the appended claims.

## Claims

1. A method for sending an offline message, applicable to an instant messaging, IM, system based on session initiation protocol, SIP, /SIP for instant messaging and presence leveraging extensions, SIMPLE, comprising:
sending, by an offline message sending client, an offline message to be stored in an offline message processing server of an offline message receiver through a message session relay protocol, MSRP channel,
wherein the MSRP channel is an MSRP channel already established between the offline message sending client and the offline message processing server or a newly-established MSRP channel;
**characterized in that**:
if the offline message receiver is a single subscriber, establishing new MSRP channels and sending the offline message comprises:
establishing an MSRP channel between the offline message sending client and a sender home IM server;
establishing an MSRP channel between the sender home IM server and a receiver home IM server;
establishing an MSRP channel between the receiver home IM server and the offline message processing server; and
sending, by the offline message sending client, the offline message to the offline message processing server sequentially through the above established MSRP channels.

2. The method according to claim 1, wherein, the offline message processing server feeds back an MSRP response message or delivers a report to the receiver home IM server in response to receiving the offline message;
the receiver home IM server feeds back an MSRP response message or delivers a report to the sender home IM server in response to receiving the offline message; and
the sender home IM server feeds back an MSRP response message or delivers a report to the offline message sending client in response to receiving the offline message.

3. The method according to claim 1, wherein the process of the establishment of the MSRP channel initiated by the offline message sending client comprises:
initiating (1), by the offline message sending client, a SIP INVITE of establishing an MSRP channel to the sender home IM server, wherein the SIP INVITE carries SIP uniform resource identifier, URI, information and session description protocol, SDP, information of the offline message sending client, and SIP URI information of the offline message receiving client;
initiating (3), by the sender home IM server, a new SIP INVITE of establishing an MSRP channel to the receiver home IM server according to the SIP URI information of the offline message receiving client, wherein the SIP INVITE initiated by the sender home IM server carries SIP URI information and SDP information of the sender home IM server, and the SIP URI information of the offline message receiving client;
initiating (6), by the receiver home IM server, a new SIP INVITE of establishing an MSRP channel to the offline message processing server, after determining the offline message receiving client is offline, wherein the SIP INVITE initiated by the receiver home IM server carries SIP URI information and SDP information of the receiver home IM server, and the SIP URI information of the offline message receiving client;
feeding back (8), by the offline message processing server, a SIP response message to the receiver home IM server, wherein the SIP response message carries the SDP information of the offline message processing server for establishing an MSRP channel;
feeding back (10), by the receiver home IM server, a SIP response message to the sender home IM server, wherein the SIP response message fed back by the receiver home IM server carries the SDP information of the receiver home IM server for establishing an MSRP channel;
feeding back (13), by the sender home IM server, a SIP response message to the offline message sending client, wherein the SIP response message fed back by the sender home IM server carries the SDP information of the sender home IM server for establishing an MSRP channel; and
sending (15), by the offline message sending client, an acknowledge message to the sender home IM server, so as to establish the MSRP channel there-between; sending (17), by the sender home IM server, an acknowledge message to the receiver home IM server, as to establish the MSRP channel there-between; and sending (20), by the receiver home IM server, an acknowledge message to the offline message processing server, so as to establish the MSRP channel there-between.

4. A method for sending an offline message, applicable to an IM system based on SIP/ SIMPLE, comprising:
sending, by an offline message sending client, an offline message to be stored in an offline message processing server of an offline message receiver through a message session relay protocol, MSRP channel, wherein the MSRP channel is an MSRP channel already established between the offline message sending client and the offline message processing server or a newly-established MSRP channel;
**characterized in that**:
if the offline message receiver is a group subscriber and new MSRP channels need to be established, the method comprises:
establishing an MSRP channel between the offline message sending client and a group home IM server;
establishing an MSRP channel between the group home IM server and the offline message processing server; and
sending, by the offline message sending client, the offline message to the offline message processing server sequentially through the above established MSRP channels.

5. The method according to claim 4, wherein the establishing an MSRP channel between the offline message sending client and a group home IM server comprises:
establishing an MSRP channel between the offline message sending client and a sender home IM server;
establishing an MSRP channel between the sender home IM server and the group home IM server;
wherein the establishing an MSRP channel between the group home IM server and the offline message processing server comprises:
establishing an MSRP channel between the group home IM server and a receiver home IM server;
establishing an MSRP channel between the receiver home IM server and the offline message processing server.

6. The method according to claim 5, wherein, the offline message processing server feeds back an MSRP response message or delivers a report to the receiver home IM server in response to receiving the offline message;
the receiver home IM server feeds back an MSRP response message or delivers a report to the group home IM server in response to receiving the offline message;
the group home IM server feeds back an MSRP response message or delivers a report to the sender home IM server in response to receiving the offline message; and
the sender home IM server feeds back an MSRP response message or delivers a report to the offline message sending client in response to receiving the offline message.

7. The method according to claim 5, wherein the process of the establishment of the MSRP channel initiated by the offline message sending client comprises:
initiating (1), by the offline message sending client, a SIP INVITE of establishing an MSRP channel to the sender home IM server, wherein the SIP INVITE carries the SIP URI information and SDP information of the offline message sending client, and SIP URI information of the group;
initiating (3), by the sender home IM server, a new SIP INVITE of establishing an MSRP channel to the group home IM server according to the SIP URI information of the group, wherein the SIP INVITE initiated by the sender home IM server carries the SIP URI information and SDP information of the sender home IM server, and the SIP URI information of the group home IM server and the group;
analyzing, by the group home IM server, the group subscriber, and respectively sending (5) a new SIP INVITE of establishing an MSRP channel to the receiver home IM server;
initiating (8), by the receiver home IM server, a new SIP INVITE of establishing an MSRP channel to the offline message processing server after determining the offline message receiving client is offline, wherein the SIP INVITE initiated by the receiver home IM server carries the SIP URI information and SDP information of the receiver home IM server, and the SIP URI information of the offline message receiving client;
feeding back (10), by the offline message processing server, a SIP response message to the receiver home IM server, wherein the SIP response message carries the SDP information of the offline message processing server for establishing an MSRP channel;
feeding back (12), by the receiver home IM server, a SIP response message to the group home IM server, wherein the SIP response message fed back by the receiver home IM server carries the SDP information of the receiver home IM server for establishing an MSRP channel;
feeding back (15), by the group home IM server, a SIP response message to the sender home IM server, wherein the SIP response message fed back by the group home IM server carries the SDP information of the group home IM server for establishing an MSRP channel;
feeding back (17), by the sender home IM server, a SIP response message to the offline message sending client, wherein the SIP response message carries the SDP information of the sender home IM server for establishing an MSRP channel; and
sending (19), by the offline message sending client, an acknowledge message to the sender home IM server, so as to establish the MSRP channel there-between; sending (21), by the sender home IM server, an acknowledge message to the group home IM server, as to establish the MSRP channel there-between; sending (23), by the group home IM server, an acknowledge message to the receiver home IM server, so as to establish the MSRP channel there-between; and sending (26), by the receiver home IM server, an acknowledge message to the offline message processing server, so as to establish the MSRP channel there-between.

8. The method according to claim 7, wherein the process of the establishment of the MSRP channel initiated by the offline message sending client comprises:
initiating (1), by the offline message sending client, a SIP INVITE of establishing an MSRP channel, and forwarding (3) the SIP INVITE through the sender home IM server to the group home IM server, wherein the SIP INVITE carries the SIP URI information and SDP information of the offline message sending client, and the SIP URI information of the group;
analyzing, by the group home IM server, the subscribers in the group, and respectively initiating (5) a new SIP INVITE of establishing an MSRP channel to the receiver home IM server, wherein the SIP INVITE initiated by the group home IM server carries the SIP URI information of the offline message sender and receiver clients, and the SDP information of the group home IM server; forwarding (8), by the receiver home IM server, the request to the offline message processing server after determining the offline message receiving client is offline;
feeding back (10), by the offline message processing server, a SIP response message, and forwarding (12) the SIP response message through the receiver home IM server to the group home IM server, wherein the SIP response message carries the SDP information of the offline message processing server for establishing an MSRP channel;
feeding back (15), by the group home IM server, a SIP response message, and forwarding (17) the SIP response message through the sender home IM server to the offline message sending client, wherein the SIP response message fed back by the group home IM server carries the SDP information of the group home IM server for establishing an MSRP channel;
and
sending (19), by the offline message sending client, an acknowledge message, and forwarding (21) the acknowledge message through the sender home IM server to the group home IM server, so as to establish the MSRP channel between the offline message sending client and the group home IM server; and sending (23), by the group home IM server, an acknowledge message to the offline message processing server, so as to establish the MSRP channel there-between.

9. A method for receiving an offline message, applicable to an instant messaging, IM, system, comprising: transmitting the offline message stored in an offline message processing server through a message session relay protocol, MSRP, channel to an offline message receiving client, wherein the MSRP channel is an MSRP channel already established between the offline message receiving client and the offline message processing server or a newly-established MSRP channel,
**characterized in that**:
if new MSRP channels need to be established for receiving the offline message, the method comprises:
establishing an MSRP channel between the offline message receiving client and the receiver home IM server;
establishing an MSRP channel between the receiver home IM server and the offline message processing server; and
transmitting the offline message through the above established MSRP channels.

10. The method according to claim 9, wherein the establishing of the MSRP channel is initiated by the offline message receiving client or the receiver home IM server.

11. The method according to claim 10, wherein the initiating of the establishment of the MSRP channel by the offline message receiving client comprises:
initiating (1), by the offline message receiving client, a SIP INVITE of establishing an MSRP channel to the receiver home IM server, wherein the SIP INVITE carries the SIP URI address information, an offline message ID list to be obtained, and the SDP information of the offline message receiving client;
initiating (3), by the receiver home IM server, a new SIP INVITE of establishing an MSRP channel to the offline message processing server, wherein the SIP INVITE initiated by the receiver home IM server carries the SDP information and an offline message ID list to be obtained of the receiver home IM server, and the SIP URI address information of the offline message receiving client and the offline message processing server;
feeding back (5), by the offline message processing server, a SIP response message to the receiver home IM server, wherein the SIP response message carries the SDP information of the offline message processing server for establishing an MSRP channel;
feeding back (7), by the receiver home IM server, a SIP response message to the offline message receiving client, wherein the SIP response message fed back by the receiver home IM server carries the SDP information of the receiver home IM server for establishing an MSRP channel; and
sending (9), by the offline message receiving client, an acknowledge message to the receiver home IM server, so as to establish the MSRP channel there-between; sending (11), by the receiver home IM server, an acknowledge message to the offline message processing server, so as to establish the MSRP channel there-between.

12. The method according to claim 10, wherein the initiating of the establishment of the MSRP channel by the receiver home IM server comprises:
sending (1), by the receiver home IM server, a SIP INVITE message to the offline message receiving client, wherein the SIP INVITE message carries the SIP URI address information and SDP information of the receiver home IM server;
feeding back (3), by the offline message receiving client, a SIP response message to the receiver home IM server, wherein the SIP response message carries the SDP information of the offline message receiving client for establishing an MSRP channel;
sending (5), by the receiver home IM server, an acknowledge message to the offline message receiving client, so as to establish the MSRP channel there-between;
sending (7), by the receiver home IM server, a new SIP INVITE message to the offline message processing server, wherein the SIP INVITE message carries the SIP URI address information, an offline message ID list to be obtained, and the SDP information of the receiver home IM server;
feeding back (9), by the offline message processing server, a SIP response message to the receiver home IM server, wherein the SIP response message carries the SDP information of the offline message processing server for establishing an MSRP channel; and
sending (11), by the receiver home IM server, an acknowledge message to the offline message processing server, so as to establish the MSRP channel there-between.

13. An offline message processing system, comprising an offline message sending client, an offline message processing server, and an offline message receiving client; wherein
message session relay protocol, MSRP, channels are established between the offline message sending client and the offline message processing server, the offline message sending client sends an offline message to the offline message processing server through the MSRP channels established there-between, and the offline message processing server stores the received offline message; and
MSRP channels are established between the offline message processing server and the offline message receiving client, and the offline message processing server sends the stored offline message to the offline message receiving client through the established MSRP channels there-between;
**characterized by** further comprising a sender home instant messaging, IM, server and a receiver home IM server; wherein
the MSRP channels established between the offline message sending client and the offline message processing server further comprise:
an MSRP channel between the offline message sending client and the sender home IM server;
an MSRP channel between the sender home IM server and the receiver home IM server;
an MSRP channel between the receiver home IM server and the offline message processing server; and
the offline message sending client sends the offline message to the offline message processing server sequentially through the above established MSRP channels.

14. The offline message processing system according to claim 13, wherein the MSRP channels established between the offline message processing server and the offline message receiving client comprise:
an MSRP channel between the offline message receiving client and a receiver home IM server;
an MSRP channel between the receiver home IM server and the offline message processing server; and
the offline message processing server transmits the offline message to the offline message receiving client sequentially through the above established MSRP channels.

15. The offline message processing system according to claim 13, further comprising a first group home IM server;
wherein the MSRP channel between the sender home IM server and the receiver home IM server comprise:
an MSRP channel between the sender home IM server and the first group home IM server;
an MSRP channel between the first group home IM server and the receiver home IM server.

16. An offline message processing system, comprising an offline message sending client, an offline message processing server, and an offline message receiving client; wherein
message session relay protocol, MSRP, channels are established between the offline message sending client and the offline message processing server, the offline message sending client sends an offline message to the offline message processing server through the MSRP channels established there-between, and the offline message processing server stores the received offline message; and
MSRP channels are established between the offline message processing server and the offline message receiving client, and the offline message processing server sends the stored offline message to the offline message receiving client through the established MSRP channels there-between;
**characterized by** further comprising a second group home IM server;
wherein the MSRP channels established between the offline message sending client and the offline message processing server comprise:
an MSRP channel between the offline message sending client and the second group home IM server;
an MSRP channel between the second group home IM server and the offline message processing server; and
the offline message sending client sends the offline message to the offline message processing server sequentially through the above established MSRP channels.

## Patentansprüche

1. Verfahren zum Senden einer Offline-Nachricht, das auf ein System des Instant Messaging, IM, auf der Basis des Session Initiation Protocol, SIP, bzw. /SIP für Instant Messaging und Presence Leveraging Extensions, SIMPLE, anwendbar ist, umfassend:
Senden einer in einem Offline-Nachrichtenverarbeitungsserver eines Offline-Nachrichtenempfängers zu speichernden Offline-Nachricht durch einen Offline-Nachrichtensende-Client durch einen Kanal des Message Session Relay Protocol, MSRP, wobei der MSRP-Kanal ein bereits zwischen dem Offline-Nachrichtensende-Client und dem Offline-Nachrichtenverarbeitungsserver hergestellter MSRP-Kanal oder ein neu hergestellter MSRP-Kanal ist;
**dadurch gekennzeichnet, dass**
wenn der Offline-Nachrichtenempfänger ein einzelner Subskribent ist, das Herstellen von neuen MSRP-Kanälen und das Senden der Offline-Nachricht Folgendes umfasst:
Herstellen eines MSRP-Kanals zwischen dem Offline-Nachrichtensende-Client und einem Absender-Heimat-IM-Server;
Herstellen eines MSRP-Kanals zwischen dem Absender-Heimat-IM-Server und einem Empfänger-Heimat-IM-Server;
Herstellen eines MSRP-Kanals zwischen dem Empfänger-Heimat-IM-Server und dem Offline-Nachrichtenverarbeitungsserver; und
Senden der Offline-Nachricht durch den Offline-Nachrichtensende-Client zu dem Offline-Nachrichtenverarbeitungsserver sequenziell durch die oben hergestellten MSRP-Kanäle.

2. Verfahren nach Anspruch 1, wobei der Offline-Nachrichtenverarbeitungsserver als Reaktion auf den Empfang der Offline-Nachricht eine MSRP-Antwortnachricht rückmeldet oder eine Meldung an den Empfänger-Heimat-IM-Server abliefert;
der Empfänger-Heimat-IM-Server als Reaktion auf den Empfang der Offline-Nachricht eine MSRP-Antwortnachricht rückmeldet oder eine Meldung an den Absender-Heimat-IM-Server abliefert; und
der Absender-Heimat-IM-Server als Reaktion auf den Empfang der Offline-Nachricht eine MSRP-Antwortnachricht rückmeldet oder eine Meldung an den Offline-Nachrichtensende-Client abliefert.

3. Verfahren nach Anspruch 1, wobei der Prozess der Herstellung des MSRP-Kanals, der durch den Offline-Nachrichtensende-Client eingeleitet wird, Folgendes umfasst:
Einleiten (1) eines SIP INVITE des Herstellens eines MSRP-Kanals zu dem Absender-Heimat-IM-Server durch den Offline-Nachrichtensende-Client, wobei das SIP INVITE Informationen des SIP Uniform Resource Identifier, URI, und Informationen des Session Description Protocol, SDP, des Offline-Nachrichtensende-Client und SIP-URI-Informationen des Offline-Nachrichtenempfangs-Client führt;
Einleiten (3) eines neuen SIP INVITE des Herstellens eines MSRP-Kanals zu dem Empfänger-Heimat-IM-Server durch den Absender-Heimat-IM-Server gemäß den SIP-URI-Informationen des Offline-Nachrichtenempfangs-Client, wobei das durch den Absender-Heimat-IM-Server eingeleitete SIP INVITE SIP-URI-Informationen und SDP-Informationen des Absender-Heimat-IM-Servers und die SIP-URI-Informationen des Offline-Nachrichtenempfangs-Client führt;
Einleiten (6) eines neuen SIP INVITE des Herstellens eines MSRP-Kanals zu dem Offline-Nachrichtenverarbeitungsserver durch den Empfänger-Heimat-IM-Server, nachdem bestimmt wird, dass der Offline-Nachrichtenempfangs-Client offline ist, wobei das durch den Empfänger-Heimat-IM-Server eingeleitete SIP INVITE SIP-URI-Informationen und SDP-Informationen des Empfänger-Heimat-IM-Servers und die SIP-URI-Informationen des Offline-Nachrichtenempfangs-Client führt;
Rückmelden (8) einer SIP-Antwortnachricht an den Empfänger-Heimat-IM-Server durch den Offline-Nachrichtenverarbeitungsserver, wobei die SIP-Antwortnachricht die SDP-Informationen des Offline-Nachrichtenverarbeitungsservers zum Herstellen eines MSRP-Kanals führt;
Rückmelden (10) einer SIP-Antwortnachricht an den Absender-Heimat-IM-Server durch den Empfänger-Heimat-IM-Server, wobei die durch den Empfänger-Heimat-IM-Server rückgemeldete SIP-Antwortnachricht SDP-Informationen des Empfänger-Heimat-IM-Servers zum Herstellen eines MSRP-Kanals führt;
Rückmelden (13) einer SIP-Antwortnachricht an den Offline-Nachrichtensende-Client durch den Absender-Heimat-IM-Server, wobei die durch den Absender-Heimat-IM-Server rückgemeldete SIP-Antwortnachricht die SDP-Informationen des Absender-Heimat-IM-Servers zum Herstellen eines MSRP-Kanals führt; und
Senden (15) einer Bestätigungsnachricht durch den Offline-Nachrichtensende-Client zu dem Absender-Heimat-IM-Server, um so den MSRP-Kanal zwischen ihnen herzustellen; Senden (17) einer Bestätigungsnachricht durch den Absender-Heimat-IM-Server zu dem Empfänger-Heimat-IM-Server, um so den MSRP-Kanal zwischen ihnen herzustellen;
und Senden (20) einer Bestätigungsnachricht zu dem Offline-Nachrichtenverarbeitungsserver durch den Empfänger-Heimat-IM-Server, um so den MSRP-Kanal zwischen ihnen herzustellen.

4. Verfahren zum Senden einer Offline-Nachricht, das auf ein IM-System auf der Basis von SIP/SIMPLE anwendbar ist, umfassend:
Senden einer in einem Offline-Nachrichtenverarbeitungsserver eines Offline-Nachrichtenempfängers zu speichernden Offline-Nachricht durch einen Offline-Nachrichtensende-Client durch einen Kanal des Message Session Relay Protocol, MSRP,
wobei der MSRP-Kanal ein bereits zwischen dem Offline-Nachrichtensende-Client und dem Offline-Nachrichtenverarbeitungsserver hergestellter MSRP-Kanal oder ein neu hergestellter MSRP-Kanal ist;
**dadurch gekennzeichnet, dass**
wenn der Offline-Nachrichtenempfänger ein Gruppensubskribent ist und neue MSRP-Kanäle hergestellt werden müssen, das Verfahren Folgendes umfasst:
Herstellen eines MSRP-Kanals zwischen dem Offline-Nachrichtensende-Client und einem Gruppen-Heimat-IM-Server;
Herstellen eines MSRP-Kanals zwischen dem Gruppen-Heimat-IM-Server und dem Offline-Nachrichtenverarbeitungsserver; und
Senden der Offline-Nachricht durch den Offline-Nachrichtensende-Client zu dem Offline-Nachrichtenverarbeitungsserver sequenziell durch die oben hergestellten MSRP-Kanäle.

5. Verfahren nach Anspruch 4, wobei das Herstellen eines MSRP-Kanals zwischen dem Offline-Nachrichtensende-Client und einem Gruppen-Heimat-IM-Server Folgendes umfasst:
Herstellen eines MSRP-Kanals zwischen dem Offline-Nachrichtensende-Client und einem Absender-Heimat-IM-Server;
Herstellen eines MSRP-Kanals zwischen dem Absender-Heimat-IM-Server und dem Gruppen-Heimat-IM-Server;
wobei das Herstellen eines MSRP-Kanals zwischen dem Gruppen-Heimat-IM-Server und dem Offline-Nachrichtenverarbeitungsserver Folgendes umfasst:
Herstellen eines MSRP-Kanals zwischen dem Gruppen-Heimat-IM-Server und einem Empfänger-Heimat-IM-Server;
Herstellen eines MSRP-Kanals zwischen dem Empfänger-Heimat-IM-Server und dem Offline-Nachrichtenverarbeitungsserver.

6. Verfahren nach Anspruch 5, wobei der Offline-Nachrichtenverarbeitungsserver als Reaktion auf den Empfang der Offline-Nachricht eine MSRP-Antwortnachricht rückmeldet oder eine Meldung an den Empfänger-Heimat-IM-Server abliefert;
der Empfänger-Heimat-IM-Server als Reaktion auf den Empfang der Offline-Nachricht eine MSRP-Antwortnachricht rückmeldet oder eine Meldung an den Gruppen-Heimat-IM-Server abliefert;
der Gruppen-Heimat-IM-Server als Reaktion auf den Empfang der Offline-Nachricht eine MSRP-Antwortnachricht rückmeldet oder eine Meldung an den Absender-Heimat-IM-Server abliefert; und
der Absender-Heimat-IM-Server als Reaktion auf den Empfang der Offline-Nachricht eine MSRP-Antwort rückmeldet oder eine Meldung an den Offline-Nachrichtensende-Client abliefert.

7. Verfahren nach Anspruch 5, wobei der Prozess der Herstellung des MSRP-Kanals, der durch den Offline-Nachrichtensende-Client eingeleitet wird, Folgendes umfasst:
Einleiten (1) eines SIP INVITE des Herstellens eines MSRP-Kanals zu dem Absender-Heimat-IM-Server durch den Offline-Nachrichtensende-Client, wobei das SIP INVITE die SIP-URI-Informationen und SDP-Informationen des Offline-Nachrichtensende-Client und SIP-URI-Informationen der Gruppe führt;
Einleiten (3) eines neuen SIP INVITE des Herstellens eines MSRP-Kanals zu dem Gruppen-Heimat-IM-Server durch den Absender-Heimat-IM-Server gemäß den SIP-URI-Informationen der Gruppe, wobei das durch den Absender-Heimat-IM-Server eingeleitete SIP INVITE die SIP-URI-Informationen und SDP-Informationen des Absender-Heimat-IM-Servers und die SIP-URI-Informationen des Gruppen-Heimat-IM-Servers und der Gruppe führt;
Analysieren des Gruppensubskribenten durch den Gruppen-Heimat-IM-Server und jeweils Senden (5) eines neuen SIP INVITE des Herstellens eines MSRP-Kanals zu dem Empfänger-Heimat-IM-Server;
Einleiten (8) eines neuen SIP INVITE des Herstellens eines MSRP-Kanals zu dem Offline-Nachrichtenverarbeitungsserver durch den Empfänger-Heimat-IM-Server, nachdem bestimmt wird, dass der Offline-Nachrichtenempfangs-Client offline ist, wobei das durch den Empfänger-Heimat-IM-Server eingeleitete SIP INVITE die SIP-URI-Informationen und SDP-Informationen des Empfänger-Heimat-IM-Servers und die SIP-URI-Informationen des Offline-Nachrichtenempfangs-Client führt;
Rückmelden (10) einer SIP-Antwortnachricht an den Empfänger-Heimat-IM-Server durch den Offline-Nachrichtenverarbeitungsserver, wobei die SIP-Antwortnachricht die SDP-Informationen des Offline-Nachrichtenverarbeitungsservers zum Herstellen eines MSRP-Kanals führt;
Rückmelden (12) einer SIP-Antwortnachricht an den Gruppen-Heimat-IM-Server durch den Empfänger-Heimat-IM-Server, wobei die durch den Empfänger-Heimat-IM-Server rückgemeldete SIP-Antwortnachricht die SDP-Informationen des Empfänger-Heimat-IM-Servers zum Herstellen eines MSRP-Kanals führt;
Rückmelden (15) einer SIP-Antwortnachricht an den Absender-Heimat-IM-Server durch den Gruppen-Heimat-IM-Server, wobei die durch den Gruppen-Heimat-IM-Server rückgemeldete SIP-Antwortnachricht die SDP-Informationen des Gruppen-Heimat-IM-Servers zum Herstellen eines MSRP-Kanals führt;
Rückmelden (17) einer SIP-Antwortnachricht an den Offline-Nachrichtensende-Client durch den Absender-Heimat-IM-Server, wobei die SIP-Antwortnachricht die SDP-Informationen des Absender-Heimat-IM-Servers zum Herstellen eines MSRP-Kanals führt; und
Senden (19) einer Bestätigungsnachricht durch den Offline-Nachrichtensende-Client zu dem Absender-Heimat-IM-Server, um so den MSRP-Kanal zwischen ihnen herzustellen;
Senden (21) einer Bestätigungsnachricht durch den Absender-Heimat-IM-Server zu dem Gruppen-Heimat-IM-Server, um so den MSRP-Kanal zwischen ihnen herzustellen;
Senden (23) einer Bestätigungsnachricht durch den Gruppen-Heimat-IM-Server zu dem Empfänger-Heimat-IM-Server, um so den MSRP-Kanal zwischen ihnen herzustellen; und
Senden (26) einer Bestätigungsnachricht durch den Empfänger-Heimat-IM-Server zu dem Offline-Nachrichtenverarbeitungsserver, um so den MSRP-Kanal zwischen ihnen herzustellen.

8. Verfahren nach Anspruch 7, wobei der Prozess der Herstellung des MSRP-Kanals, der durch den Offline-Nachrichtensende-Client eingeleitet wird, Folgendes umfasst:
Einleiten (1) eines SIP INVITE des Herstellens eines MSRP-Kanals durch den Offline-Nachrichtensende-Client und Weiterleiten (3) des SIP INVITE durch den Absender-Heimat-IM-Server zu dem Gruppen-Heimat-IM-Server, wobei das SIP INVITE die SIP-URI-Informationen und SDP-Informationen des Offline-Nachrichtensende-Client und die SIP-URI-Informationen der Gruppe führt;
Analysieren der Subskribenten in der Gruppe durch den Gruppen-Heimat-IM-Server und jeweils Einleiten (5) eines neuen SIP INVITE des Herstellens eines MSRP-Kanals zu dem Empfänger-Heimat-IM-Server, wobei das durch den Gruppen-Heimat-IM-Server eingeleitete SIP INVITE die SIP-URI-Informationen der Offline-Nachrichtenabsender- und -Empfänger-Clients und die SDP-Informationen des Gruppen-Heimat-IM-Servers führt; Weiterleiten (8) der Anforderung durch den Empfänger-Heimat-IM-Server zu dem Offline-Nachrichtenverarbeitungsserver, nachdem bestimmt wird, dass der Offline-Nachrichtenempfangs-Client offline ist;
Rückmelden (10) einer SIP-Antwortnachricht durch den Offline-Nachrichtenverarbeitungsserver und Weiterleiten (12) der SIP-Antwortnachricht durch den Empfänger-Heimat-IM-Server zu dem Gruppen-Heimat-IM-Server, wobei die SIP-Antwortnachricht die SDP-Informationen des Offline-Nachrichtenverarbeitungsservers zum Herstellen eines MSRP-Kanals führt;
Rückmelden (15) einer SIP-Antwortnachricht durch den Gruppen-Heimat-IM-Server und Weiterleiten (17) der SIP-Antwortnachricht durch den Absender-Heimat-IM-Server zu dem Offline-Nachrichtensende-Client, wobei die durch den Gruppen-Heimat-IM-Server rückgemeldete SIP-Antwortnachricht die SDP-Informationen des Gruppen-Heimat-IM-Servers zum Herstellen eines MSRP-Kanals führt; und
Senden (19) einer Bestätigungsnachricht durch den Offline-Nachrichtensende-Client und Weiterleiten (21) der Bestätigungsnachricht durch den Absender-Heimat-IM-Server zu dem Gruppen-Heimat-IM-Server, um so den MSRP-Kanal zwischen dem Offline-Nachrichtensende-Client und dem Gruppen-Heimat-IM-Server herzustellen; und Senden (23) einer Bestätigungsnachricht durch den Gruppen-Heimat-IM-Server zu dem Offline-Nachrichtenverarbeitungsserver, um so den MSRP-Kanal zwischen ihnen herzustellen.

9. Verfahren zum Empfangen einer Offline-Nachricht, das auf ein System des Instant Messaging, IM, anwendbar ist, umfassend: Senden der in einem Offline-Nachrichtenverarbeitungsserver gespeicherten Offline-Nachricht durch einen Kanal des Message Session Relay Protocol, MSRP, zu einem Offline-Nachrichtenempfangs-Client, wobei der MSRP-Kanal ein bereits zwischen dem Offline-Nachrichtenempfangs-Client und dem Offline-Nachrichtenverarbeitungsserver hergestellter MSRP-Kanal oder ein neu hergestellter MSRP-Kanal ist,
**dadurch gekennzeichnet, dass**
wenn neue MSRP-Kanäle zum Empfangen der Offline-Nachricht hergestellt werden müssen, das Verfahren Folgendes umfasst:
Herstellen eines MSRP-Kanals zwischen dem Offline-Nachrichtenempfangs-Client und dem Empfänger-Heimat-IM-Server;
Herstellen eines MSRP-Kanals zwischen dem Empfänger-Heimat-IM-Server und dem Offline-Nachrichtenverarbeitungsserver; und
Senden der Offline-Nachricht durch die oben hergestellten MSRP-Kanäle.

10. Verfahren nach Anspruch 9, wobei das Herstellen des MSRP-Kanals durch den Offline-Nachrichtenempfangs-Client oder den Empfänger-Heimat-IM-Server eingeleitet wird.

11. Verfahren nach Anspruch 10, wobei das Einleiten der Herstellung des MSRP-Kanals durch den Offline-Nachrichtenempfangs-Client Folgendes umfasst:
Einleiten (1) eines SIP INVITE des Herstellens eines MSRP-Kanals zu dem Empfänger-Heimat-IM-Server durch den Offline-Nachrichtenempfangs-Client, wobei das SIP INVITE die SIP-URI-Adresseninformationen, eine zu erhaltende Offline-Nachrichten-ID-Liste und die SDP-Informationen des Offline-Nachrichtenempfangs-Client führt;
Einleiten (3) eines neuen SIP INVITE des Herstellens eines MSRP-Kanals zu dem Offline-Nachrichtenverarbeitungsserver durch den Empfänger-Heimat-IM-Server, wobei das durch den Empfänger-Heimat-IM-Server eingeleitete SIP INVITE die SDP-Informationen und eine zu erhaltende Offline-Nachrichten-ID-Liste des Empfänger-Heimat-IM-Servers und die SIP-URI-Adresseninformationen des Offline-Nachrichtenempfangs-Client und des Offline-Nachrichtenverarbeitungsservers führt;
Rückmelden (5) einer SIP-Antwortnachricht an den Empfänger-Heimat-IM-Server durch den Offline-Nachrichtenverarbeitungsserver, wobei die SIP-Antwortnachricht die SDP-Informationen des Offline-Nachrichtenverarbeitungsservers zum Herstellen eines MSRP-Kanals führt;
Rückmelden (7) einer SIP-Antwortnachricht an den Offline-Nachrichtenempfangs-Client durch den Empfänger-Heimat-IM-Server, wobei die durch den Empfänger-Heimat-IM-Server rückgemeldete SIP-Antwortnachricht die SDP-Informationen des Empfänger-Heimat-IM-Servers zum Herstellen eines MSRP-Kanals führt; und
Senden (9) einer Bestätigungsnachricht durch den Offline-Nachrichtenempfangs-Client zu dem Empfänger-Heimat-IM-Server, um so den MSRP-Kanal zwischen ihnen herzustellen; Senden (11) einer Bestätigungsnachricht durch den Empfänger-Heimat-IM-Server zu dem Offline-Nachrichtenverarbeitungsserver, um so den MSRP-Kanal zwischen ihnen herzustellen.

12. Verfahren nach Anspruch 10, wobei das Einleiten der Herstellung des MSRP-Kanals durch den Empfänger-Heimat-IM-Server Folgendes umfasst:
Senden (1) einer Nachricht SIP INVITE durch den Empfänger-Heimat-IM-Server zu dem Offline-Nachrichtenempfangs-Client, wobei die Nachricht SIP INVITE die SIP-URI-Adresseninformationen und SDP-Informationen des Empfänger-Heimat-IM-Servers führt;
Rückmelden (3) einer SIP-Antwortnachricht an den Empfänger-Heimat-IM-Server durch den Offline-Nachrichtenempfangs-Client, wobei die SIP-Antwortnachricht die SDP-Informationen des Offline-Nachrichtenempfangs-Client zum Herstellen eines MSRP-Kanals führt;
Senden (5) einer Bestätigungsnachricht durch den Empfänger-Heimat-IM-Server zu dem Offline-Nachrichtenempfangs-Client, um so den MSRP-Kanal zwischen ihnen herzustellen; Senden (7) einer neuen Nachricht SIP INVITE durch den Empfänger-Heimat-IM-Server zu dem Offline-Nachrichtenverarbeitungsserver, wobei die Nachricht SIP INVITE die SIP-URI-Adresseninformationen, eine zu erhaltende Offline-Nachrichten-ID-Liste und die SDP-Informationen des Empfänger-Heimat-IM-Servers führt;
Rückmelden (9) einer SIP-Antwortnachricht an den Empfänger-Heimat-IM-Server durch den Offline-Nachrichtenverarbeitungsserver, wobei die SIP-Antwortnachricht die SDP-Informationen des Offline-Nachrichtenverarbeitungsservers zum Herstellen eines MSRP-Kanals führt; und
Senden (11) einer Bestätigungsnachricht durch den Empfänger-Heimat-IM-Server zu dem Offline-Nachrichtenverarbeitungsserver, um so den MSRP-Kanal zwischen ihnen herzustellen.

13. Offline-Nachrichtenverarbeitungssystem, das einen Offline-Nachrichtensende-Client, einen Offline-Nachrichtenverarbeitungsserver und einen Offline-Nachrichtenempfangs-Client umfasst; wobei
Kanäle des Message Session Relay Protocol, MSRP, zwischen dem Offline-Nachrichtensende-Client und dem Offline-Nachrichtenverarbeitungsserver hergestellt werden, der Offline-Nachrichtensende-Client eine Offline-Nachricht zu dem Offline-Nachrichtenverarbeitungsserver durch die zwischen ihnen hergestellten MSRP-Kanäle sendet und der Offline-Nachrichtenverarbeitungsserver die empfangene Offline-Nachricht speichert; und
MSRP-Kanäle zwischen dem Offline-Nachrichtenverarbeitungsserver und dem Offline-Nachrichtenempfangs-Client hergestellt werden und der Offline-Nachrichtenverarbeitungsserver die gespeicherte Offline-Nachricht zu dem Offline-Nachrichtenempfangs-Client durch die zwischen ihnen hergestellten MSRP-Kanäle sendet;
**dadurch gekennzeichnet, dass** es ferner einen Absender-Heimat-Instant-Messaging IM-Server und einen Empfänger-Heimat-IM-Server umfasst; wobei
die zwischen dem Offline-Nachrichtensende-Client und dem Offline-Nachrichtenverarbeitungsserver hergestellten MSRP-Kanäle ferner Folgendes umfassen:
einen MSRP-Kanal zwischen dem Offline-Nachrichtensende-Client und dem Absender-Heimat-IM-Server;
einen MSRP-Kanal zwischen dem Absender-Heimat-IM-Server und dem Empfänger-Heimat-IM-Server;
einen MSRP-Kanal zwischen dem Empfänger-Heimat-IM-Server und dem Offline-Nachrichtenverarbeitungsserver; und
der Offline-Nachrichtensende-Client die Offline-Nachricht sequenziell durch die oben hergestellten MSRP-Kanäle zu dem Offline-Nachrichtenverarbeitungsserver sendet.

14. Offline-Nachrichtenverarbeitungssystem nach Anspruch 13, wobei die zwischen dem Offline-Nachrichtenverarbeitungsserver und dem Offline-Nachrichtenempfangs-Client hergestellten MSRP-Kanäle Folgendes umfassen:
einen MSRP-Kanal zwischen dem Offline-Nachrichtenempfangs-Client und einem Empfänger-Heimat-IM-Server, einen MSRP-Kanal zwischen dem Empfänger-Heimat-IM-Server und dem Offline-Nachrichtenverarbeitungsserver; und
der Offline-Nachrichtenverarbeitungsserver die Offline-Nachricht sequenziell durch die oben hergestellten MSRP-Kanäle zu dem Offline-Nachrichtenempfangs-Client sendet.

15. Offline-Nachrichtenverarbeitungssystem nach Anspruch 13, das ferner einen ersten Gruppen-Heimat-IM-Server umfasst;
wobei die MSRP-Kanäle zwischen dem Absender-Heimat-IM-Server und dem Empfänger-Heimat-IM-Server Folgendes umfassen:
einen MSRP-Kanal zwischen dem Absender-Heimat-IM-Server und dem ersten Gruppen-Heimat-IM-Server;
einen MSRP-Kanal zwischen dem ersten Gruppen-Heimat-IM-Server und dem Empfänger-Heimat-IM-Server.

16. Offline-Nachrichtenverarbeitungssystem, das einen Offline-Nachrichtensende-Client, einen Offline-Nachrichtenverarbeitungsserver und einen Offline-Nachrichtenempfangs-Client umfasst; wobei
Kanäle des Message Session Relay Protocol, MSRP, zwischen dem Offline-Nachrichtensende-Client und dem Offline-Nachrichtenverarbeitungsserver hergestellt werden, der Offline-Nachrichtensende-Client eine Offline-Nachricht zu dem Offline-Nachrichtenverarbeitungsserver durch die zwischen ihnen hergestellten MSRP-Kanäle sendet und der Offline-Nachrichtenverarbeitungsserver die empfangene Offline-Nachricht speichert; und
MSRP-Kanäle zwischen dem Offline-Nachrichtenverarbeitungsserver und dem Offline-Nachrichtenempfangs-Client hergestellt werden und der Offline-Nachrichtenverarbeitungsserver die gespeicherte Offline-Nachricht zu dem Offline-Nachrichtenempfangs-Client durch die hergestellten MSRP-Kanäle zwischen ihnen sendet;
**dadurch gekennzeichnet, dass** es ferner einen zweiten Gruppen-Heimat-IM-Server umfasst;
wobei die zwischen dem Offline-Nachrichtensende-Client und dem Offline-Nachrichtenverarbeitungsserver hergestellten MSRP-Kanäle Folgendes umfassen:
einen MSRP-Kanal zwischen dem Offline-Nachrichtensende-Client und dem zweiten Gruppen-Heimat-IM-Server;
einen MSRP-Kanal zwischen dem zweiten Gruppen-Heimat-IM-Server und dem Offline-Nachrichtenverarbeitungsserver; und
der Offline-Nachrichtensende-Client die Offline-Nachricht sequenziell durch die oben hergestellten MSRP-Kanäle zu dem Offline-Nachrichtenverarbeitungsserver sendet.

## Revendications

1. Procédé d'envoi d'un message hors ligne, pouvant s'appliquer à un système de messagerie instantanée, IM (Instant Messaging), basé sur le protocole d'ouverture de session, SIP (Session Initiation Protocol), /SIP pour extensions de messagerie instantanée et de gestion de présence, SIMPLE (SIP for Instant Messaging and Presence Leveraging Extensions) comprenant :
l'envoi, par un client d'envoi de messages hors ligne, d'un message hors ligne devant être stocké sur un serveur de traitement de messages hors ligne d'un récepteur de messages hors ligne par l'intermédiaire d'un canal à protocole de relais de session de messages, MSRP (Message Session Relay Protocol),
le canal MSRP étant un canal MSRP déjà établi entre le client d'envoi de messages hors ligne et le serveur de traitement de messages hors ligne ou un canal MSRP nouvellement établi ;
**caractérisé en ce que** :
si le récepteur de messages hors ligne est un abonné unique, de nouveaux canaux MSRP sont établis et l'envoi du message hors ligne comprend :
l'établissement d'un canal MSRP entre le client d'envoi de messages hors ligne et un serveur IM domestique émetteur ;
l'établissement d'un canal MSRP entre le serveur IM domestique émetteur et un serveur IM domestique récepteur ;
l'établissement d'un canal MSRP entre le serveur IM domestique récepteur et le serveur de traitement de messages hors ligne ; et
l'envoi séquentiel, par le client d'envoi de messages hors ligne, du message hors ligne au serveur de traitement de messages hors ligne par l'intermédiaire des canaux MSRP établis ci-dessus.

2. Procédé selon la revendication 1, dans lequel le serveur de traitement de messages hors ligne envoie en retour un message de réponse MSRP ou fournit un rapport au serveur IM domestique récepteur en réponse à la réception du message hors ligne ;
le serveur IM domestique récepteur envoie en retour un message de réponse MSRP ou fournit un rapport au serveur IM domestique émetteur en réponse à la réception du message hors ligne ; et
le serveur IM domestique émetteur envoie en retour un message de réponse MSRP ou fournit un rapport au client d'envoi de messages hors ligne en réponse à la réception du message hors ligne.

3. Procédé selon la revendication 1, dans lequel le processus d'établissement du canal MSRP déclenché par le client d'envoi de messages hors ligne comprend :
le déclenchement (1), par le client d'envoi de messages hors ligne, d'une INVITE SIP consistant à établir un canal MSRP vers le serveur IM domestique émetteur, l'INVITE SIP acheminant des informations d'identifiant uniforme de ressources, URI (Uniform Resource Identifier) SIP, et des informations de Protocole de Description de Session, SDP (Session Description Protocol), du client d'envoi de messages hors ligne, et des informations URI SIP du client de réception de messages hors ligne ;
le déclenchement (3), par le serveur IM domestique émetteur, d'une nouvelle INVITE SIP d'établissement d'un canal MSRP vers le serveur IM domestique récepteur conformément aux informations URI SIP du client de réception de messages hors ligne, l'INVITE SIP déclenchée par le serveur IM domestique émetteur acheminant des informations URI SIP et des informations SDP du serveur IM domestique émetteur, et les informations URI SIP du client de réception de messages hors ligne ;
le déclenchement (6), par le serveur IM domestique récepteur, d'une nouvelle INVITE SIP d'établissement d'un canal MSRP vers le serveur de traitement de messages hors ligne, après détermination du fait que le client de réception de messages hors ligne est hors ligne, l'INVITE SIP déclenchée par le serveur IM domestique récepteur acheminant des informations URI SIP et des informations SDP du serveur IM domestique récepteur, et les informations URI SIP du client de réception de messages hors ligne ;
l'envoi en retour (8), par le serveur de traitement de messages hors ligne, d'un message de réponse SIP au serveur IM domestique récepteur, le message de réponse SIP acheminant les informations SDP du serveur de traitement de messages hors ligne afin d'établir un canal MSRP ;
l'envoi en retour (10), par le serveur IM domestique récepteur, d'un message de réponse SIP au serveur IM domestique émetteur, le message de réponse SIP envoyé en retour par le serveur IM domestique récepteur acheminant les informations SDP du serveur IM domestique récepteur afin d'établir un canal MSRP ;
l'envoi en retour (13), par le serveur IM domestique émetteur, d'un message de réponse SIP au client d'envoi de messages hors ligne, le message de réponse SIP envoyé en retour par le serveur IM domestique émetteur acheminant les informations SDP du serveur IM domestique émetteur afin d'établir un canal MSRP ; et
l'envoi (15), par le client d'envoi de messages hors ligne, d'un message d'accusé de réception au serveur IM domestique émetteur afin d'établir entre ceux-ci le canal MSRP ; l'envoi (17), par le serveur IM domestique émetteur, d'un message d'accusé de réception au serveur IM domestique récepteur afin d'établir entre ceux-ci le canal MSRP ; et l'envoi (20), par le serveur IM domestique récepteur, d'un message d'accusé de réception au serveur de traitement de messages hors ligne afin d'établir entre ceux-ci le canal MSRP.

4. Procédé d'envoi d'un message hors ligne, pouvant être appliqué à un système IM basé sur le protocole SIP/SIMPLE comprenant :
l'envoi, par un client d'envoi de messages hors ligne, d'un message hors ligne devant être stocké sur un serveur de traitement de messages hors ligne d'un récepteur de messages hors ligne par l'intermédiaire d'un canal à protocole de relais de session de messages, MSRP, le canal MSRP étant un canal MSRP déjà établi entre le client d'envoi de messages hors ligne et le serveur de traitement de messages hors ligne ou un canal MSRP nouvellement établi ;
**caractérisé en ce que** :
si le récepteur de messages hors ligne est un abonné de groupe et s'il est nécessaire d'établir de nouveaux canaux MSRP, le procédé comprend :
l'établissement d'un canal MSRP entre le client d'envoi de messages hors ligne et un serveur IM domestique de groupe ;
l'établissement d'un canal MSRP entre le serveur IM domestique de groupe et le serveur de traitement de messages hors ligne ; et
l'envoi séquentiel, par le client d'envoi de messages hors ligne, du message hors ligne au serveur de traitement de messages hors ligne par l'intermédiaire des canaux MSRP établis précités.

5. Procédé selon la revendication 4, dans lequel l'établissement d'un canal MSRP entre le client d'envoi de messages hors ligne et un IM domestique de groupe comprend :
l'établissement d'un canal MSRP entre le client d'envoi de messages hors ligne et un serveur IM domestique émetteur ;
l'établissement d'un canal MSRP entre le serveur IM domestique émetteur et le serveur IM domestique de groupe ;
l'établissement d'un canal MSRP entre le serveur IM domestique de groupe et le serveur de traitement de messages hors ligne comprenant :
l'établissement d'un canal MSRP entre le serveur IM domestique de groupe et un serveur IM domestique récepteur ; et
l'établissement d'un canal MSRP entre le serveur IM domestique récepteur et le serveur de traitement de messages hors ligne.

6. Procédé selon la revendication 5, dans lequel le serveur de traitement de messages hors ligne envoie en retour un message de réponse MSRP ou fournit un rapport au serveur IM domestique récepteur en réponse à la réception du message hors ligne ;
le serveur IM domestique récepteur envoie en retour un message de réponse MSRP ou fournit un rapport au serveur IM domestique de groupe en réponse à la réception du message hors ligne ;
le serveur IM domestique de groupe envoie en retour un message de réponse MSRP ou fournit un rapport au serveur IM domestique émetteur en réponse à la réception du message hors ligne ; et
le serveur IM domestique émetteur envoie en retour un message de réponse MSRP ou fournit un rapport au client d'envoi de messages hors ligne en réponse à la réception du message hors ligne.

7. Procédé selon la revendication 5, dans lequel le processus d'établissement du canal MSRP déclenché par le client d'envoi de messages hors ligne comprend :
le déclenchement (1), par le client d'envoi de messages hors ligne, d'une INVITE SIP d'établissement d'un canal MSRP vers le serveur IM domestique émetteur, l'INVITE SIP acheminant les informations URI SIP et les informations SDP du client émetteur de messages hors ligne, et des informations URI SIP du groupe ;
le déclenchement (3), par le serveur IM domestique émetteur, d'une nouvelle INVITE SIP d'établissement d'un canal MSRP vers le serveur IM domestique de groupe conformément aux informations URI SIP du groupe, l'INVITE SIP déclenchée par le serveur IM domestique émetteur acheminant les informations URI SIP et les informations SDP du serveur IM domestique émetteur, et les informations URI SIP du serveur IM domestique de groupe et du groupe ;
l'analyse, par le serveur IM domestique de groupe, de l'abonné de groupe, et l'envoi respectif (5) d'une nouvelle INVITE SIP d'établissement d'un canal MSRP vers le serveur IM domestique récepteur ;
le déclenchement (8), par le serveur IM domestique récepteur, d'une nouvelle INVITE SIP consistant à établir un canal MSRP vers le serveur de traitement de messages hors ligne après détermination du fait que le client de réception de messages hors ligne est hors ligne, le message INVITE SIP déclenché par le serveur IM domestique récepteur acheminant les informations URI SIP et les informations SDP du serveur IM domestique récepteur, et les informations URI SIP du client de réception de messages hors ligne ;
l'envoi en retour (10), par le serveur de traitement de messages hors ligne, d'un message de réponse SIP au serveur IM domestique récepteur, le message de réponse SIP acheminant les informations SDP du serveur de traitement de messages hors ligne afin d'établir un canal MSRP ;
l'envoi en retour (12), par le serveur IM domestique récepteur, d'un message de réponse SIP au serveur IM domestique de groupe, le message de réponse SIP envoyé en retour par le serveur IM domestique récepteur acheminant les informations SDP du serveur IM domestique récepteur afin d'établir un canal MSRP ;
l'envoi en retour (15), par le serveur IM domestique de groupe, d'un message de réponse SIP au serveur IM domestique émetteur, le message de réponse SIP envoyé en retour par le serveur IM domestique de groupe acheminant les informations SDP du serveur IM domestique de groupe afin d'établir un canal MSRP ;
l'envoi en retour (17), par le serveur IM domestique émetteur, d'un message de réponse SIP au client d'envoi de messages hors ligne, le message de réponse SIP acheminant les informations SDP du serveur IM domestique émetteur afin d'établir un canal MSRP ; et
l'envoi (19), par le client d'envoi de messages hors ligne, d'un message d'accusé de réception au serveur IM domestique émetteur afin d'établir entre ceux-ci le canal MSRP ; l'envoi (21), par le serveur IM domestique émetteur, d'un message d'accusé de réception au serveur IM domestique de groupe afin d'établir entre ceux-ci le canal MSRP ; l'envoi (23) par le serveur IM domestique de groupe, d'un message d'accusé de réception au serveur IM domestique récepteur afin d'établir entre ceux-ci le canal MSRP ; et l'envoi (26), par le serveur IM domestique récepteur, d'un message d'accusé de réception au serveur de traitement de messages hors ligne afin d'établir entre ceux-ci le canal MSRP.

8. Procédé selon la revendication 7, dans lequel le processus d'établissement du canal MSRP déclenché par le client d'envoi de messages hors ligne comprend :
le déclenchement (1), par le client d'envoi de messages hors ligne, d'une INVITE SIP d'établissement de canal MSRP, et la réexpédition (3) de l'INVITE SIP par l'intermédiaire du serveur IM domestique émetteur au serveur IM domestique de groupe, l'INVITE SIP acheminant les informations URI SIP et les informations SDP du client d'envoi de messages hors ligne, et les informations URI SIP du groupe ;
l'analyse, par le serveur IM domestique de groupe, des abonnés du groupe, et le déclenchement respectif (5) d'une nouvelle INVITE SIP d'établissement d'un canal MSRP vers le serveur IM domestique récepteur, l'INVITE SIP déclenchée par le serveur IM domestique de groupe acheminant les informations URI SIP des clients émetteurs et récepteurs de messages hors ligne, et les informations SDP du serveur IM domestique de groupe ; la réexpédition (8), par le serveur IM domestique récepteur, de la demande au serveur de traitement de messages hors ligne après détermination du fait que le client de réception de messages hors ligne est hors ligne ;
l'envoi en retour (10), par le serveur de traitement de messages hors ligne, d'un message de réponse SIP, et la réexpédition (12) du message de réponse SIP par l'intermédiaire du serveur IM domestique récepteur au serveur IM domestique de groupe, le message de réponse SIP acheminant les informations SDP du serveur de traitement de messages hors ligne afin d'établir un canal MSRP ;
l'envoi en retour (15), par le serveur IM domestique de groupe, d'un message de réponse SIP, et la réexpédition (17) du message de réponse SIP par l'intermédiaire du serveur IM domestique émetteur au client d'envoi de messages hors ligne, le message de réponse SIP envoyé en retour par le serveur IM domestique de groupe acheminant les informations SDP du serveur IM domestique de groupe afin d'établir un canal MSRP ; et
l'envoi (19), par le client d'envoi de messages hors ligne, d'un message d'accusé de réception, et la réexpédition (21) du message d'accusé de réception par l'intermédiaire du serveur IM domestique émetteur au serveur IM domestique de groupe afin d'établir le canal MSRP entre le client d'envoi de messages hors ligne et le serveur IM domestique de groupe ; et l'envoi (23), par le serveur IM domestique de groupe, d'un message d'accusé de réception au serveur de traitement de messages hors ligne afin d'établir entre ceux-ci le canal MSRP.

9. Procédé de réception d'un message hors ligne, pouvant s'appliquer à un système de messagerie instantanée, IM, comprenant : la transmission du message hors ligne stocké sur un serveur de traitement de messages hors ligne par l'intermédiaire d'un canal à protocole de relais de session de messages, MSRP, à un client de réception de messages hors ligne, le canal MSRP étant un canal MSRP déjà établi entre le client de réception de messages hors ligne et le serveur de traitement de messages hors ligne ou un canal MSRP nouvellement établi ;
**caractérisé en ce que** :
s'il est nécessaire d'établir de nouveaux canaux MSRP pour recevoir le message hors ligne, le procédé comprend :
l'établissement d'un canal MSRP entre le client de réception de messages hors ligne et le serveur IM domestique récepteur ;
l'établissement d'un canal MSRP entre le serveur IM domestique récepteur et le serveur de traitement de messages hors ligne ; et
la transmission du message hors ligne par l'intermédiaire des canaux MSRP établis ci-dessus.

10. Procédé selon la revendication 9, dans lequel l'établissement du canal MSRP est déclenché par le client de réception de messages hors ligne ou le serveur IM domestique récepteur.

11. Procédé selon la revendication 10, dans lequel le déclenchement de l'établissement du canal MSRP par le client de réception de messages hors ligne comprend :
le déclenchement (1), par le client de réception de messages hors ligne, d'une INVITE SIP d'établissement d'un canal MSRP vers le serveur IM domestique récepteur, l'INVITE SIP acheminant les informations d'adresse URI SIP, une liste d'ID de messages hors ligne devant être obtenue et les informations SDP du client de réception de messages hors ligne ;
le déclenchement (3), par le serveur IM domestique récepteur, d'une nouvelle INVITE SIP d'établissement d'un canal MSRP vers le serveur de traitement de messages hors ligne, l'INVITE SIP déclenchée par le serveur IM domestique récepteur acheminant les informations SDP et une liste d'ID de messages hors ligne du serveur IM domestique récepteur devant être obtenue, et les informations d'adresse URI SIP du client de réception de messages hors ligne et du serveur de traitement de messages hors ligne ;
l'envoi en retour (5), par le serveur de traitement de messages hors ligne, d'un message de réponse SIP au serveur IM domestique récepteur, le message de réponse SIP acheminant les informations SDP du serveur de traitement de messages hors ligne afin d'établir un canal MSRP ;
l'envoi en retour (7), par le serveur IM domestique récepteur, d'un message de réponse SIP au client de réception de messages hors ligne, le message de réponse SIP envoyé en retour par le serveur IM domestique récepteur acheminant les informations SDP du serveur IM domestique récepteur afin d'établir un canal MSRP ; et
l'envoi (9), par le client de réception de messages hors ligne, d'un message d'accusé de réception au serveur IM domestique récepteur afin d'établir entre ceux-ci le canal MSRP ; l'envoi (11), par le serveur IM domestique récepteur, d'un message d'accusé de réception au serveur de traitement de messages hors ligne afin d'établir entre ceux-ci le canal MSRP.

12. Procédé selon la revendication 10, dans lequel le déclenchement de l'établissement du canal MSRP par le serveur IM domestique récepteur comprend :
l'envoi (1), par le serveur IM domestique récepteur, d'un message INVITE SIP au client de réception de messages hors ligne, le message INVITE SIP acheminant les informations d'adresse URI SIP et les informations SDP du serveur IM domestique récepteur ;
l'envoi en retour (3), par le client de réception de messages hors ligne, d'un message de réponse SIP au serveur IM domestique récepteur, le message de réponse SIP acheminant les informations SDP du client de réception de messages hors ligne afin d'établir un canal MSRP ;
l'envoi (5), par le serveur IM domestique récepteur, d'un message d'accusé de réception au client de réception de messages hors ligne afin d'établir entre ceux-ci le canal MSRP ;
l'envoi (7), par le serveur IM domestique récepteur, d'un nouveau message INVITE SIP au serveur de traitement de messages hors ligne, le message INVITE SIP acheminant les informations d'adresse URI SIP, une liste d'ID de messages hors ligne devant être obtenue, et les informations SDP du serveur IM domestique récepteur ;
l'envoi en retour (9), par le serveur de traitement de messages hors ligne, d'un message de réponse SIP au serveur IM domestique récepteur, le message de réponse SIP acheminant les informations SDP du serveur de traitement de messages hors ligne afin d'établir un canal MSRP ; et
l'envoi (11), par le serveur IM domestique récepteur, d'un message d'accusé de réception au serveur de traitement de messages hors ligne afin d'établir entre ceux-ci le canal MSRP.

13. Système de traitement de messages hors ligne, comprenant un client d'envoi de messages hors ligne, un serveur de traitement de messages hors ligne et un client de réception de messages hors ligne ; dans lequel
des canaux à protocole de relais de session de messages, MSRP, sont établis entre le client d'envoi de messages hors ligne et le serveur de traitement de messages hors ligne, le client d'envoi de messages hors ligne envoie un message hors ligne au serveur de traitement de messages hors ligne par l'intermédiaire des canaux MSRP établis entre ceux-ci, et le serveur de traitement de messages hors ligne stocke le message hors ligne reçu ; et
des canaux MSRP sont établis entre le serveur de traitement de messages hors ligne et le client de réception de messages hors ligne, et le serveur de traitement de messages hors ligne envoie le message hors ligne stocké au client de réception de messages hors ligne par l'intermédiaire des canaux MSRP établis entre ceux-ci ; **caractérisé en ce qu'**il comprend en outre un serveur de messagerie instantanée, IM, domestique émetteur et un serveur IM domestique récepteur ; dans lequel les canaux MSRP établis entre le client d'envoi de messages hors ligne et le serveur de traitement de messages hors ligne comprennent en outre :
un canal MSRP entre le client d'envoi de messages hors ligne et le serveur IM domestique émetteur ;
un canal MSRP entre le serveur IM domestique émetteur et le serveur IM domestique récepteur ;
un canal MSRP entre le serveur IM domestique récepteur et le serveur de traitement de messages hors ligne ; et
le client d'envoi de messages hors ligne envoie séquentiellement le message hors ligne au serveur de traitement de messages hors ligne par l'intermédiaire des canaux MSRP établis ci-dessus.

14. Système de traitement de messages hors ligne selon la revendication 13, dans lequel les canaux MSRP établis entre le serveur de traitement de messages hors ligne et le client de réception de messages hors ligne comprennent :
un canal MSRP entre le client de réception de messages hors ligne et un serveur IM domestique récepteur ;
un canal MSRP entre le serveur IM domestique récepteur et le serveur de traitement de messages hors ligne ; et
le serveur de traitement de messages hors ligne transmet séquentiellement le message hors ligne au client de réception de messages hors ligne par l'intermédiaire des canaux MSRP établis ci-dessus.

15. Système de traitement de messages hors ligne selon la revendication 13, comprenant en outre un premier serveur IM domestique de groupe ;
dans lequel les canaux MSRP entre le serveur IM domestique émetteur et le serveur IM domestique récepteur comprennent :
un canal MSRP entre le serveur IM domestique émetteur et le premier serveur IM domestique de groupe ;
un canal MSRP entre le premier serveur IM domestique de groupe et le serveur IM domestique récepteur.

16. Système de traitement de messages hors ligne, comprenant un client d'envoi de messages hors ligne, un serveur de traitement de messages hors ligne et un client de réception de messages hors ligne ; dans lequel
des canaux à protocole de relais de session de messages, MSRP, sont établis entre le client d'envoi de messages hors ligne et le serveur de traitement de messages hors ligne, le client d'envoi de messages hors ligne envoie un message hors ligne au serveur de traitement de messages hors ligne par l'intermédiaire des canaux MSRP établis entre ceux-ci, et le serveur de traitement de messages hors ligne stocke le message hors ligne reçu ; et
des canaux MSRP sont établis entre le serveur de traitement de messages hors ligne et le client de réception de messages hors ligne, et le serveur de traitement de messages hors ligne envoie le message hors ligne stocké au client de réception de messages hors ligne par l'intermédiaire des canaux MSRP établis entre ceux-ci ; **caractérisé en ce qu'**il comprend en outre un second serveur IM domestique de groupe ;
dans lequel les canaux MSRP établis entre le client d'envoi de messages hors ligne et le serveur de traitement de messages hors ligne comprennent :
un canal MSRP entre le client d'envoi de messages hors ligne et le second serveur IM domestique de groupe ;
un canal MSRP entre le second serveur IM domestique de groupe et le serveur de traitement de messages hors ligne ; et
le client d'envoi de messages hors ligne envoie séquentiellement le message hors ligne au serveur de traitement de messages hors ligne par l'intermédiaire des canaux MSRP établis ci-dessus.
